(19) **Europäisches Patentamt / European Patent Office / Office européen des brevets**

(11) **EP 3 201 597 B1**

(12) **FASCICULE DE BREVET EUROPEEN**

(45) Date de publication et mention
de la délivrance du brevet:
**21.11.2018 Bulletin 2018/47**

(21) Numéro de dépôt: **15778244.2**

(22) Date de dépôt: **30.09.2015**

(51) Int Cl.:
***G01N 3/06*** *(2006.01)*

(86) Numéro de dépôt international:
**PCT/EP2015/072611**

(87) Numéro de publication internationale:
**WO 2016/050871 (07.04.2016 Gazette 2016/14)**

(54) **PROCÉDÉ DE CARACTÉRISATION DU MÉCANISME DE FISSURATION D'UN MATERIAU À PARTIR DE SA SURFACE DE RUPTURE**

VERFAHREN ZUR CHARAKTERISIERUNG DES RISSBILDUNGSMECHANISMUS EINES MATERIALS AUSGEHEND VON DER BRUCHSTELLENOBERFLÄCHE

METHOD FOR CHARACTERIZING THE CRACKING MECHANISM OF A MATERIAL FROM THE FRACTURE SURFACE THEREOF

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **03.10.2014 FR 1459525**

(43) Date de publication de la demande:
**09.08.2017 Bulletin 2017/32**

(73) Titulaires:
• **Sorbonne Université**
**75006 Paris (FR)**
• **Centre National de la Recherche Scientifique**
**75016 Paris (FR)**
• **Vernede, Stéphane**
**Shanghai 200031 (CN)**

(72) Inventeurs:
• **VERNEDE, Stéphane**
**Shanghai 200031 (CN)**
• **PONSON, Laurent**
**F-75018 Paris (FR)**

(74) Mandataire: **IPAZ**
**Parc Les Algorithmes, Bâtiment Platon**
**CS 70003 Saint-Aubin**
**91192 Gif-sur-Yvette Cedex (FR)**

(56) Documents cités:
**JP-A- H11 101 625     US-A1- 2007 213 942**

• **ELISABETH BOUCHAUD: "Scaling properties of cracks", JOURNAL OF PHYSICS: CONDENSED MATTER, vol. 9, no. 21, 26 mai 1997 (1997-05-26), pages 4319-4344, XP055191774, ISSN: 0953-8984, DOI: 10.1088/0953-8984/9/21/002**
• **UCHIDA Y ET AL: "Relationship between fatigue striation height and stress ratio", JOURNAL OF MATERIALS SCIENCE, KLUWER ACADEMIC PUBLISHERS, BO, vol. 34, no. 10, 1 mai 1999 (1999-05-01), pages 2411-2419, XP019209343, ISSN: 1573-4803, DOI: 10.1023/A:1004510615621**

**Description**

**Domaine technique**

L'invention se situe dans le domaine de la caractérisation des matériaux et, plus particulièrement, dans le domaine de l'analyse fractographique de la rupture d'une structure à partir d'au moins une de ses surfaces de rupture. Elle s'applique notamment à la détermination d'une longueur caractéristique des processus d'endommagement mis en jeu au cours de la fissuration de la structure, permettant la détermination de la ténacité et de l'énergie de rupture du matériau constituant la structure, et la détermination de la cause d'une fracture. Plus précisément, l'invention concerne un procédé de caractérisation d'une surface de rupture dans une structure solide ayant subi une fissuration, le procédé s'appuyant sur l'analyse statistique des données d'une carte topographique représentant, pour un ensemble de points situés dans un plan moyen de la surface de rupture, la hauteur de la surface de rupture par rapport à ce plan moyen.

**État de la technique antérieure**

L'étude de la morphologie d'une surface de rupture dans une pièce permet de tirer de nombreuses informations sur les propriétés du matériau de cette pièce, et sur le mécanisme de fissuration ayant abouti à la rupture de la pièce. En particulier, il a été montré que, pour une grande variété de matériaux hétérogènes, les surfaces de rupture présentent des propriétés universelles, bien que les mécanismes de rupture à l'échelle microscopique soient très différents d'un matériau à l'autre (Bouchaud, E.: Scaling properties of cracks, J. Phys. Condens. Matter 9, 4319-4344, 1997). De nombreuses études expérimentales ont en effet suggéré que les surfaces de rupture sont auto-affines sur une large gamme d'échelles de longueur, c'est-à-dire que l'évolution spatiale de la fonction de corrélation des hauteurs le long d'une direction donnée de la surface évolue par rapport à l'abscisse selon une loi de puissance. Ainsi, en notant la fonction de corrélation des hauteurs le long d'une direction donnée comme suit :

$$\Delta h(\Delta r) = \langle \left( h(r + \Delta r) - h(r) \right)^2 \rangle_r^{1/2}$$

l'évolution spatiale de cette fonction peut s'écrire :

$$\Delta h / l = (\Delta r / l)^H$$

où h est la hauteur à l'abscisse r, $\Delta h$ est la différence de hauteur moyenne entre deux points distants de $\Delta r$, l'exposant H est l'exposant de rugosité, aussi appelé exposant de Hurst, et *l* est la topothésie ou longueur pour laquelle $\Delta h(\Delta r = l)$ = *l*. Plusieurs études ont conclu que la valeur H serait universelle et isotrope, sensiblement égale à 0,75.

Dans la demande de brevet FR 2 892 811, il a été décrit que l'exposant de Hurst est en fait anisotrope. Plus particulièrement, il présente, dans la direction de propagation d'une fissure, une valeur $\beta$ sensiblement égale à 0,60 et, dans la direction parallèle au front de la fissure, une valeur $\zeta$ sensiblement égale à 0,75. La valeur de l'exposant de Hurst est ainsi inférieure dans la direction de propagation de la fissure. Cette anisotropie permet donc de remonter à la direction de propagation de la fissure.

La demande de brevet US 2013/013223 décrit une méthode de détermination de propriétés mécaniques d'une structure à partir d'une analyse de ses surfaces de rupture. Plus précisément, la méthode est basée sur une mesure par stéréographie d'une densité de lignes de striation. Ces lignes de striation sont des motifs spécifiques au mode de rupture par fatigue, suite à l'application d'un grand nombre de cycles de charge et de décharge. Chaque ligne de striation correspond à une variation relativement importante de la hauteur des points sur une surface de rupture. Les inventeurs proposent des relations entre la densité des lignes de striation et des propriétés mécaniques du matériau caractérisant sa résistance à la fatigue. En particulier, la densité des lignes de striation est reliée à la variation $\Delta K$ du facteur d'intensité des contraintes imposées au cours d'un cycle de charge et de décharge. En raison de la nature des données extraites sur les surfaces de rupture, cette méthode s'applique uniquement dans le cadre d'une rupture par fatigue. En outre, la détermination des lignes de striation implique la fixation d'un seuil pour différencier, sur les surfaces de rupture, les sauts de plus grande amplitude des autres sauts. Ce seuil doit être fixé avec des précautions particulières afin d'obtenir des résultats fiables. Enfin, le nombre de lignes de striations sur une surface de rupture est relativement faible, typiquement de l'ordre d'une vingtaine de lignes. La méthode repose donc sur une faible quantité d'informations, ce qui empêche un traitement des surfaces de rupture sur différentes zones, et limite la précision des résultats.

Parmi les techniques connues de l'état de la technique, aucune ne permet de déduire de l'analyse morphologique de la surface de rupture, la dimension de la zone d'endommagement. Cette zone d'endommagement correspond à la zone en pointe de fissure où les mécanismes dissipatifs de cavitations et de microfissurations ont lieu. La dimension de la zone d'endommagement est reliée à l'énergie de rupture du matériau, et donc à sa ténacité. Par ténacité, on entend la capacité d'un matériau à résister à la propagation d'une fissure.

Des techniques d'imagerie sophistiquées permettent d'observer le processus de fissuration pendant sa réalisation. Cependant, du fait de la rapidité du processus, et des dimensions en jeu, il est en pratique très difficile d'observer et de quantifier ce processus. En outre, la prévision de la fracturation, quant à sa localisation et l'instant auquel elle se produit, est rarement possible. Tel est notamment le cas lorsque l'on cherche à analyser l'origine de la fracture d'une pièce d'une machine industrielle ou d'un aéronef, par exemple après son crash.

Il existe par conséquent un besoin de fournir un procédé permettant de déterminer, à partir de l'analyse de la surface de rupture d'une pièce, au moins une donnée relative aux mécanismes de rupture du matériau dont est faite la pièce, voire des données relatives à sa résistance. Ces informations pourront être utilisées pour déterminer *post mortem*, au cours d'une phase d'analyse, les conditions et les causes de la rupture d'une pièce. Il est à noter que la détermination de données relatives au mode de rupture d'un matériau et à sa résistance par l'intermédiaire de l'analyse de la surface de rupture permet de renseigner sur la rupture du matériau au niveau local, à l'endroit même où la pièce s'est fracturée, et en différents emplacements de la surface fracturée.

**Exposé de l'invention**

Un premier but de l'invention est ainsi de fournir un procédé de caractérisation d'une surface de rupture d'une structure solide, permettant de déterminer une dimension caractéristique de la zone d'endommagement.

Un autre but de l'invention est de fournir des informations sur le processus de fissuration ayant abouti à la fracturation de la structure. Ces informations concernent par exemple la forme et/ou la longueur des microfissures, leur densité ou encore la vitesse de fissuration.

Encore un autre but de l'invention est de permettre la détermination *post mortem* d'informations relatives au processus de fissuration après l'achèvement complet de ce processus. En pratique, ce but est atteint en analysant la surface de rupture formée sur la structure.

L'invention sera mieux comprise après le rappel des quelques considérations suivantes. Le processus de fissuration dans une structure se développe par la formation de microcavités et de microfissures qui, en se rejoignant, forment une fissure principale dont la surface de rupture est la trace. Ce processus de coalescence de microfissures/microcavités laisse sur la surface de rupture des marques qui se présentent sous la forme de falaises, c'est-à-dire des zones dont la pente locale est particulièrement élevée. Comme décrit dans C. Guerra, J. Scheibert, D. Bonamy et D. Dalmas: "Understanding fast macroscale fracture from microcrack post mortem patterns", PNAS 109, 390-394 (2012), ces motifs s'expliquent par le fait que les différentes microfissures/microcavités se développent dans différents plans géométriques, et donnent donc lieu à des ruptures de pente ou des variations rapides de hauteur lorsqu'elles se rencontrent lors de l'évolution du processus de rupture. À un instant donné du processus de fissuration, tous les mécanismes de formation et de coalescence de microcavités et de microfissures se produisent dans une zone délimitée, appelée zone d'endommagement, située autour de la pointe de fissure. L'invention repose sur le principe selon lequel la dimension de la zone d'endommagement est donnée par la longueur de corrélation du réseau de falaises présent sur la surface de rupture. Une des applications de l'invention est donc la détermination de cette dimension à partir de l'analyse des surfaces de rupture.

Plus précisément, l'invention a pour objet un procédé de caractérisation, dans une structure solide ayant subi une fissuration, d'une surface de rupture de cette structure résultant de la fissuration. Le procédé comprend, à partir d'une carte topographique représentant, pour un ensemble de points {$x$} situés dans un plan moyen de la surface de rupture, une hauteur $h(x)$ de la surface de rupture par rapport au plan moyen :

■ une étape de détermination, pour chaque point $x$ de la carte topographique, d'une grandeur $\omega_\epsilon(x)$ représentative d'une différence moyenne de hauteur $\langle \delta h(x, \delta x) \rangle_{|\delta x| \le \epsilon}$ entre, d'une part, la hauteur $h(x)$ de la surface de rupture au point $x$ considéré et, d'autre part, la hauteur $h(x + \delta x)$ de la surface de rupture en un ou plusieurs points {$x + \delta x$} situés à l'intérieur d'un cercle formé dans le plan moyen, de rayon $\epsilon$, et centré sur le point $x$ considéré. L'ensemble des grandeurs $\omega_\epsilon(x)$ définit une fonction sur l'ensemble des points {$x$}.

Le procédé de caractérisation selon l'invention peut inclure l'étape d'acquisition de la carte topographique. Cette étape d'acquisition est alors effectuée préalablement à l'étape de détermination des grandeurs $\omega_\epsilon(x)$, et la carte topographique obtenue est utilisée pour cette étape de détermination des grandeurs $\omega_\epsilon(x)$.

Dans la présente demande, on entend par "structure" soit une unique pièce, soit un assemblage solidaire de plusieurs pièces, par exemple par soudure ou collage. Le matériau de chaque pièce peut être homogène ou non. Par ailleurs, par "surface de rupture" de la structure, on entend la zone de cette surface pour laquelle la carte topographique a été établie. En pratique, cette zone peut couvrir toute la surface de rupture de la structure, ou seulement une partie. Le plan moyen de la surface de rupture est alors le plan moyen de cette zone.

La carte topographique de la surface de rupture donne, pour un ensemble de points $\{x(x; y)\}$ appartenant au plan moyen, une valeur de la hauteur $h(x)$ de la surface de rupture par rapport au plan moyen en chacun de ces points. Les points $x$ sont définis par rapport à un repère du plan moyen comprenant un axe $X$, et un axe $Y$, non colinéaire à $X$. Selon une première variante de réalisation de l'invention, la carte topographique est bidimensionnelle. Autrement dit, les points $x$ sont répartis dans le plan moyen selon deux directions non parallèles, par exemple les axes $X$ et $Y$. Les points $x$ sont de préférence répartis sur le plan moyen selon une matrice régulière. Dans ce cas, on note $dx$ la résolution spatiale de la carte topographique selon l'axe $X$, et $dy$ la résolution spatiale selon l'axe $Y$. Ces résolutions peuvent être égales. La hauteur $h(x)$ est définie selon un axe $Z$ non colinéaire aux axes $X$ et $Y$. Cet axe est par exemple orthogonal aux axes $X$ et $Y$. La résolution $dh$ de la carte topographique selon l'axe $Z$ dépend de la technique d'acquisition. De manière générale, les résolutions $dx$, $dy$ et $dh$ doivent être adaptées au matériau de la pièce à analyser. Plus particulièrement, ces résolutions doivent être déterminées de sorte que la carte topographique illustre la rugosité de la surface de rupture aux échelles de l'endommagement. Soit $L_c$ l'extension de la zone d'endommagement, on choisira $dx \ll L_c$ et $dy \ll L_c$. À titre d'illustration, pour un matériau métallique, les résolutions seront avantageusement choisies proches du centième, voire du millième de la taille moyenne des grains. Pour un matériau en bois, les résolutions peuvent être sensiblement inférieures à la taille des cellules, et pour le béton à celle des grains de sable. De façon générale, il sera préférable de choisir une résolution plus petite que la taille des objets microstructuraux les plus grands caractérisant le matériau (exemple : grain, cellule, etc.). La technique d'acquisition de la carte topographique dépend du ou des matériaux de la structure à analyser. Il s'agit par exemple d'une technique de profilométrie mécanique, de profilométrie optique ou de microscopie.

Selon une deuxième variante de réalisation de l'invention, la carte topographique est monodimensionnelle. Les points $x$ sont alors répartis dans le plan moyen sur une droite appartenant à ce plan. On considère par convention qu'il s'agit de la droite $X$. Les points $x$ peuvent être sensiblement équirépartis sur la droite, c'est-à-dire répartis avec la résolution spatiale $dx$.

Les cercles de rayon $\epsilon$, centrés sur des points $x$ définissent un voisinage de ces points. Les points $\{x + \delta x\}$ peuvent être choisis n'importe où dans ce voisinage. En particulier, ils peuvent être choisis sur une courbe fermée entourant le point $x$ considéré. La courbe fermée est par exemple une ellipse, un cercle, ou un polygone, notamment un rectangle ou un carré. De préférence, la courbe fermée est un polygone régulier ou est sensiblement un cercle. Les points $\{x + \delta x\}$ considérés sont de préférence sensiblement équirépartis sur la courbe fermée, de manière à être représentatifs de "l'environnement" du point $x$ considéré. Dans le cas d'une carte topographique monodimensionnelle, les cercles de rayon $\epsilon$ définissent en fait une plage de longueurs centrée sur le point $x$ considéré.

Selon une forme particulière de réalisation, le rayon $\epsilon$ du cercle est sensiblement compris entre environ une fois une résolution spatiale de la carte topographique dans le plan moyen et environ dix fois cette résolution spatiale. La résolution spatiale considérée est par exemple la résolution spatiale $dx$, la résolution spatiale $dy$, ou une moyenne des résolutions spatiales $dx$ et $dy$. Le rayon $\epsilon$ est avantageusement égal à la plus grande des deux résolutions spatiales $dx$ et $dy$.

Du fait de leur définition, les points $x + \delta x$ ne correspondent pas nécessairement à des points $x$ de la carte topographique. Ainsi, la hauteur $h(x + \delta x)$ d'un point $x + \delta x$ peut être déterminée soit en considérant la hauteur du point de la carte topographique situé au plus près de ce point, soit en calculant la hauteur de ce point, par exemple à partir d'une moyenne des hauteurs des points adjacents.

La grandeur $\omega_\epsilon(x)$ est représentative de la différence moyenne de hauteur $\langle \delta h(x, \delta x)\rangle_{|\delta x| \leq \epsilon}$ entre la hauteur $h(x)$ de la surface de rupture au point $x$ considéré et la hauteur $h(x + \delta x)$ de la surface de rupture en un ou plusieurs points $\{x + \delta x\}$ situés à l'intérieur (notamment sur le périmètre) d'un cercle de rayon $\epsilon$, le cercle appartenant au plan moyen et étant centré sur le point $x$ considéré. Autrement dit, la grandeur $\omega_\epsilon(x)$ est représentative d'une intensité moyenne des variations de hauteur au voisinage du point $x$ considéré. Dans le cas d'une carte topographique monodimensionnelle, la grandeur $\omega_\epsilon(x)$ est représentative, pour chaque point $x$ de la carte topographique, d'une différence moyenne de hauteur $\langle \delta h(x, \delta x)\rangle_{|\delta x| \leq \epsilon}$ entre, d'une part, la hauteur $h(x)$ de la surface de rupture au point $x$ considéré et, d'autre part, la hauteur $h(x + \delta x)$ de la surface de rupture en un ou plusieurs points $\{x + \delta x\}$ situés de part et d'autre du point $x$ considéré à une distance inférieure ou égale au rayon $\epsilon$. La grandeur $\omega_\epsilon(x)$ est dite "représentative" d'une différence moyenne de hauteur pour indiquer qu'elle est déterminée à partir de cette différence de hauteur moyenne selon une relation prédéterminée. Cette relation peut définir la grandeur $\omega_\epsilon(x)$ comme étant égale à la différence moyenne de hauteur. Elle peut aussi comporter la multiplication de la différence moyenne de hauteur par une constante, ou l'addition d'une constante. Autrement dit, la grandeur $\omega_\epsilon(x)$ est déterminée par une fonction affine prenant comme variable la différence moyenne de hauteur. Dans la mesure où la grandeur $\omega_\epsilon(x)$ est représentative d'une moyenne relative à un ensemble de points pris à l'intérieur d'un cercle, elle renseigne de façon fiable sur la présence de "falaises" dans le voisinage de ce point. Sur l'ensemble des points $\{x\}$, la grandeur $\omega_\epsilon(x)$ définit une fonction ou un champ de différences de hauteur. Cette fonction $\omega_\epsilon(x)$ présente notamment l'avantage d'être faiblement impactée par d'éventuels artéfacts de mesure. La fonction $\omega_\epsilon(\mathbf{x})$ permet aussi de donner une information sur la répartition spatiale des variations de hauteur de plus grande amplitude, et donc sur la forme et la dimension des microfissures et des microcavités formées dans la zone d'endommagement.

Selon une première variante de réalisation, la grandeur $\omega_\epsilon(\mathbf{x})$ est représentative, pour chaque point $\mathbf{x}$ de la carte topographique, d'une différence moyenne de hauteur $\langle\delta h(\mathbf{x}, \delta\mathbf{x})\rangle_{|\delta\mathbf{x}|\sim\epsilon}$ entre la hauteur $h(\mathbf{x})$ de la surface de rupture au point $\mathbf{x}$ considéré, et la hauteur $h(\mathbf{x} + \delta\mathbf{x})$ de la surface de rupture en un ou plusieurs points $\{\mathbf{x} + \delta\mathbf{x}\}$ situés sensiblement sur le périmètre du cercle de rayon $\epsilon$ centré sur le point $\mathbf{x}$ considéré. Autrement dit, la grandeur $\omega_\epsilon(\mathbf{x})$ est définie par la relation :

$$\omega_\epsilon(\mathbf{x}) = f\big(\langle\delta h(\mathbf{x}, \delta\mathbf{x})\rangle_{|\delta\mathbf{x}|\sim\epsilon}\big)$$

où la fonction $a \to f(a)$ est une fonction affine, où la quantité $\delta h(\mathbf{x}, \delta\mathbf{x})$ définit la différence de hauteur $h(\mathbf{x} + \delta\mathbf{x})$ - $h(\mathbf{x})$, où le signe $\sim$ indique une quantité sensiblement égale, et où l'opérateur $\langle\delta h(\mathbf{x}, \delta\mathbf{x})\rangle_{|\delta\mathbf{x}|\sim\epsilon}$ renvoie une valeur moyenne des différences de hauteur pour l'ensemble des couples de points $\{\mathbf{x}; \mathbf{x} + \delta\mathbf{x}\}$ de la carte topographique tels que la distance $|\delta\mathbf{x}|$ est sensiblement égale au rayon $\epsilon$. Les points $\{\mathbf{x} + \delta\mathbf{x}\}$ peuvent être équirépartis sur le périmètre du cercle. La fonction $\omega_\epsilon(\mathbf{x})$ est alors isotrope.

Selon une deuxième variante de réalisation, la grandeur $\omega_\epsilon(\mathbf{x})$ est déterminée, pour chaque point $\mathbf{x}$ de la carte topographique, par la relation :

$$\omega_\epsilon(\mathbf{x}) = f\left(\frac{1}{2}log\big(\langle\delta h^2(\mathbf{x}, \delta\mathbf{x})\rangle_{|\delta\mathbf{x}|\sim\epsilon}\big)\right)$$

où la fonction $a \to f(a)$ est une fonction affine, où la quantité $\delta h(\mathbf{x}, \delta\mathbf{x})$ définit la différence de hauteur $h(\mathbf{x} + \delta\mathbf{x})$ - $h(\mathbf{x})$, où le signe $\sim$ indique une quantité sensiblement égale, où l'opérateur $\langle\delta h(\mathbf{x}, \delta\mathbf{x})\rangle_{|\delta\mathbf{x}|\sim\epsilon}$ renvoie une valeur moyenne des différences de hauteur pour l'ensemble des couples de points $\{\mathbf{x}; \mathbf{x} + \delta\mathbf{x}\}$ de la carte topographique tels que la distance $|\delta\mathbf{x}|$ est sensiblement égale au rayon $\epsilon$, et où la fonction $a \to log(a)$ est une fonction logarithme. Il peut notamment s'agir du logarithme décimal. Cette variante de réalisation présente l'avantage de lisser les différences de hauteur et de rendre plus robuste l'indicateur formé par la grandeur $\omega_\epsilon(\mathbf{x})$. L'élévation au carré de la grandeur $\delta h(\mathbf{x}, \delta\mathbf{x})$ permet d'obtenir une valeur positive de la différence de

hauteur. Elle est notamment utile en l'absence de normalisation des hauteurs $h(\mathbf{x})$.

Selon une troisième variante de réalisation, la grandeur $\omega_\epsilon(\mathbf{x})$ est déterminée, pour chaque point $\mathbf{x}$ de la carte topographique, par la relation :

$$\omega_\epsilon(\mathbf{x}) = f\left(sign\big(\langle\delta h(\mathbf{x}, \delta\mathbf{x})\rangle_{|\delta\mathbf{x}|\sim\epsilon}\big)\right)$$

où la fonction $a \to sign(a)$ est une fonction signe prenant la valeur 1 si a est strictement positif, -1 si a est strictement négatif, et 0 si a est nulle, où la quantité $\delta h(\mathbf{x}, \delta\mathbf{x})$ définit la différence de hauteur $h(\mathbf{x} + \delta\mathbf{x})$ - $h(\mathbf{x})$, où le signe $\sim$ indique une quantité sensiblement égale, et où l'opérateur $\langle\delta h(\mathbf{x}, \delta\mathbf{x})\rangle_{|\delta\mathbf{x}|\sim\epsilon}$ renvoie une valeur moyenne des différences de hauteur pour l'ensemble des couples de points $\{\mathbf{x}; \mathbf{x} + \delta\mathbf{x}\}$ de la carte topographique tels que la longueur $|\delta\mathbf{x}|$ est sensiblement égale au rayon $\epsilon$.

Dans chacune des variantes de réalisation, la relation définissant la grandeur $\omega_\epsilon(\mathbf{x})$ peut comprendre une constante réelle $\Omega_\epsilon$ déterminée de manière à ce qu'une moyenne de la fonction $\omega_\epsilon(\mathbf{x})$ soit sensiblement nulle sur l'ensemble des points $\{\mathbf{x}\}$ de la carte topographique. La constante réelle est alors déterminée par la relation :

$$\Omega_\epsilon = \langle\omega_\epsilon(\mathbf{x})\rangle_{\mathbf{x}} .$$

Les relations définissant la grandeur $\omega_\epsilon(\mathbf{x})$ deviennent ainsi respectivement :

$$\omega_\epsilon(\mathbf{x}) = \langle\delta h(\mathbf{x}, \delta\mathbf{x})\rangle_{|\delta\mathbf{x}|\sim\epsilon} - \Omega_\epsilon$$

$$\omega_\epsilon(\boldsymbol{x}) = \frac{1}{2} log\big(\langle \delta h^2(\boldsymbol{x}, \delta x)\rangle_{|\delta x|\sim\epsilon}\big) - \Omega_\epsilon$$

$$\omega_\epsilon(\boldsymbol{x}) = sign\big(\langle \delta h(\boldsymbol{x}, \delta x)\rangle_{|\delta x|\sim\epsilon}\big) - \Omega_\epsilon$$

Quelle que soit la forme de la fonction $\omega_\epsilon(\boldsymbol{x})$, il est possible d'étudier son autocorrélation en fonction d'une distance entre des couples de points. Le procédé selon l'invention peut ainsi comporter une étape de détermination, en fonction d'une distance de test $\delta r$, d'une fonction de corrélation spatiale $C_\epsilon(\delta r)$ représentative d'une corrélation spatiale entre la fonction $\omega_\epsilon(\boldsymbol{x})$ déterminée pour l'ensemble des points $\{\boldsymbol{x}\}$, et la fonction $\omega_\epsilon(\boldsymbol{x} + \delta\boldsymbol{x})$ déterminée pour l'ensemble des points $\{\boldsymbol{x} + \delta\boldsymbol{x}\}$ tels que $|\delta\boldsymbol{x}| = \delta r$. La fonction de corrélation spatiale $C_\epsilon(\delta r)$ s'écrit :

$$C_\epsilon(\delta r) = \langle \omega_\epsilon(\boldsymbol{x}).\,\omega_\epsilon(\boldsymbol{x} + \delta\boldsymbol{x})\rangle_{\boldsymbol{x},|\delta\boldsymbol{x}|=\delta r}$$

La fonction de corrélation spatiale $C_\epsilon(\delta r)$ permet de mettre en évidence une longueur caractéristique, appelée longueur de corrélation $\xi$, délimitant deux plages de distances. Dans la plage de distances $\delta r < \xi$, on observe une corrélation spatiale entre les fonctions $\omega_\epsilon(\boldsymbol{x})$ et $\omega_\epsilon(\boldsymbol{x} + \delta\boldsymbol{x})$. Cette corrélation a pour signification la présence de variations de hauteur de même amplitude sur des distances $\delta r$. Autrement dit, elle traduit la présence de falaises dont la dimension est égale à $\delta r$. Dans la plage de distances $\delta r > \xi$, la corrélation spatiale entre les fonctions $\omega_\epsilon(\boldsymbol{x})$ et $\omega_\epsilon(\boldsymbol{x} + \delta\boldsymbol{x})$ est nulle, ce qui signifie l'absence de falaises dont la dimension est supérieure à $\xi$.

Le procédé selon l'invention peut ainsi comporter une étape de détermination de la longueur de corrélation $\xi$ à partir de la fonction de corrélation spatiale $C_\epsilon(\delta r)$, la longueur de corrélation $\xi$ étant égale à la distance maximale $\delta r = |\delta\boldsymbol{x}|$ séparant des couples de points $\{\boldsymbol{x}; \boldsymbol{x} + \delta\boldsymbol{x}\}$ au-delà de laquelle la fonction de corrélation spatiale $C_\epsilon(\delta r)$ devient sensiblement égale à $\Omega_\epsilon^2$. Pour des distances $\delta r < \xi$, la fonction de corrélation spatiale $C_\epsilon(\delta r)$ prend des valeurs supérieures à $\Omega_\epsilon^2$. Lorsque la relation définissant la grandeur $\omega_\epsilon(\boldsymbol{x})$ est définie de manière à ce que la fonction $\omega_\epsilon(\boldsymbol{x})$ soit de moyenne nulle, la fonction de corrélation spatiale $C_\epsilon(\delta r)$ s'annule pour des distances $\delta r > \xi$.

Plutôt que d'étudier globalement l'autocorrélation de la fonction $\omega_\epsilon(\boldsymbol{x})$ dans toutes les directions, il est possible d'étudier son autocorrélation spatiale dans des directions déterminées du plan moyen. Chaque direction, également appelée direction d'analyse, est repérée par un angle $\theta$ défini dans le plan moyen. Le procédé peut alors comporter une étape de détermination, en fonction d'une distance de test $\delta r$ et d'une direction d'analyse $\theta$, d'une fonction de corrélation spatiale $C_{\epsilon,\theta}(\delta r)$ représentative d'une corrélation spatiale entre la fonction $\omega_\epsilon(\boldsymbol{x})$ déterminée pour l'ensemble des points $\{\boldsymbol{x}\}$, et la fonction $\omega_\epsilon(\boldsymbol{x} + \delta\boldsymbol{x})$ déterminée pour l'ensemble des points $\{\boldsymbol{x} + \delta\boldsymbol{x}\}$ situés à la distance $\delta r$ dans la direction d'analyse $\theta$.

Une longueur de corrélation dépendante de la direction $\theta$, appelée longueur de corrélation $\xi_\theta$, peut alors être déterminée à partir de la fonction de corrélation spatiale $C_{\epsilon,\theta}(\delta r)$. De manière analogue à la longueur de corrélation $\xi$, chaque longueur de corrélation $\xi_\theta$ est déterminée comme étant égale à la distance maximale $\delta r = |\delta\boldsymbol{x}|$ séparant des couples de points $\{\boldsymbol{x}; \boldsymbol{x} + \delta\boldsymbol{x}\}$ au-delà de laquelle la fonction de corrélation spatiale $C_{\epsilon,\theta}(\delta r)$ correspondante devient sensiblement égale à $\Omega_\epsilon^2$.

Les inventeurs ont pu mettre en évidence que la variation de la longueur de corrélation $\xi_\theta$ en fonction de la direction analysée $\theta$ permet de remonter à la direction de propagation de la fissure. En particulier, la longueur de corrélation $\xi_\theta$ est maximale dans la direction de propagation de la fissure, et minimale dans la direction orthogonale à la direction de propagation. Le procédé selon l'invention peut ainsi comporter une étape supplémentaire de détermination de la direction de propagation de la fissuration à partir des longueurs de corrélation $\xi_\theta$.

La ténacité $K_c$ du matériau d'une structure étant liée à la taille de la zone d'endommagement, et donc par la présente invention, à la longueur de corrélation $\xi$, il est possible de déterminer cette ténacité $K_c$ à partir de la mesure de $\xi$ faite sur les surfaces de rupture. Par ténacité, on entend la capacité d'un matériau à résister à la propagation d'une fissure. Selon une forme particulière de réalisation, le procédé comporte alors une étape de détermination d'une ténacité $K_c$ de la structure à partir de la longueur de corrélation $\xi$. À titre d'exemple, pour un matériau dont la zone d'endommagement d'extension $L_c$ est décrite par une zone cohésive caractérisée par une contrainte à rupture $\sigma_c$, la ténacité $K_c$ suit la relation :

$$K_c = \sqrt{\frac{8}{\pi}} \, \sigma_c \sqrt{L_c}$$

Cette relation est issue de la publication G. I. Barrenblatt, "The mathematical theory of equilibrium of cracks in brittle solids", Adv. Appl. Mech. 7, 55 (1962). La longueur de corrélation $\xi$ déterminée à partir des surfaces de rupture via la présente invention correspond à l'extension $L_c$ de la zone d'endommagement, et donc la ténacité du matériau peut être déterminée à travers la relation :

$$K_c = \sqrt{\frac{8}{\pi}} \, \sigma_c \sqrt{\xi}$$

La contrainte à rupture $\sigma_c$ du matériau étudié peut alors être déterminée de façon indépendante, soit en utilisant des méthodes expérimentales classiques, soit en utilisant les valeurs fournies dans la littérature. La contrainte à rupture d'un matériau est en général dans la gamme $E/10 < \sigma_c < E/5$ où $E$ est le module de Young du matériau.

Selon une autre forme particulière de réalisation, le procédé comprend :

- une étape de détermination, pour chaque point $\boldsymbol{x}$ de la carte topographique, d'une grandeur $\omega_\xi(\boldsymbol{x})$ représentative d'une différence moyenne de hauteur $\langle \delta h(x, \delta x) \rangle_{|\delta x| \sim \xi}$ entre, d'une part, la hauteur $h(\boldsymbol{x})$ de la surface de rupture au point $\boldsymbol{x}$ considéré et, d'autre part, la hauteur $h(\boldsymbol{x} + \delta\boldsymbol{x})$ de la surface de rupture en un ou plusieurs points $\{\boldsymbol{x} + \delta\boldsymbol{x}\}$ situés sensiblement sur le périmètre d'un cercle de rayon $\xi$ ou $\xi_\theta$ centré sur le point $\boldsymbol{x}$ considéré, et
- une étape de détermination d'une grandeur $h_\xi$ correspondant à une moyenne des grandeurs $\omega_\xi(\boldsymbol{x})$ sur l'ensemble des points $\{\boldsymbol{x}\}$.

Cette grandeur $h_\xi$ représente l'extension de la zone d'endommagement dans la direction orthogonale au plan moyen de la surface de rupture.

Le procédé peut comprendre, en outre :

- une étape de détermination d'une ténacité $K_c$ de la structure à partir de la grandeur $h_\xi$.

Le procédé peut également comporter une étape de détermination de l'énergie de rupture $G_c$ du matériau. En effet, celle-ci suit la relation $G_c = K_c^2/E$ ce qui permet de relier l'énergie de rupture du matériau avec la longueur de corrélation extraite à partir des surfaces de rupture via la relation :

$$G_c = \frac{8}{\pi} \frac{\sigma_c^2}{E} \xi$$

Une autre application de la mesure de l'extension de la taille de la zone d'endommagement à partir de l'analyse d'une surface de rupture est la détermination de la vitesse de fissuration. Cette détermination repose sur les observations suivantes Pour un matériau donné, cassé à une température donnée, il existe une fonction monotone $v = g(\xi)$ qui relie la longueur de corrélation $\xi$ à la vitesse de fissuration $v$ du matériau : plus la taille de la zone d'endommagement $\xi$ est grande, plus la vitesse de fissuration est grande également. Cette fonction peut être déterminée de différentes façons. Selon une première approche, la fonction $v = g(\xi)$ peut être déterminée par des tests de rupture classiques à partir d'une machine de traction. Au cours de ces tests, une fissuration à vitesse contrôlée $v$ est imposée au matériau étudié. La surface de rupture obtenue est ensuite analysée en utilisant la méthode décrite dans ce brevet, et la longueur $\xi$ est déterminée. Ce test est alors réalisé à différentes vitesses de fissuration, afin de déterminer la relation $v = g(\xi)$. Cette calibration peut par la suite être utilisée dans un contexte où la vitesse de fissuration n'est pas connue a priori et doit être déterminée à partir de la valeur de $\xi$ mesurée sur la surface de rupture.

Une autre approche visant à déterminer la fonction $v = g(\xi)$ consiste à utiliser une expression explicite de la fonction $g$ qui a été soit déterminée au préalable par des expériences, soit établie à partir d'une modélisation du processus de fissuration. Cette modélisation doit alors être adaptée au matériau étudié. Par exemple, la fissuration par corrosion sous contrainte qui a lieu dans un grand nombre de matériaux comme les verres ou les roches donne lieu à une variation en loi de puissance de la vitesse de fissuration avec la taille de la zone d'endommagement, via la formule phénoménologique de Charles (R.J. Charles, "Static fatigue of glass", J. Appl. Phys. 29, 1554 (1958)) :

$$v = A\, \xi^n$$

La constante $A$ et l'exposant $n$ ne dépendent que du matériau considéré. Il est possible dans un grand nombre de cas d'utiliser les mesures faites par d'autres auteurs et publiées dans des revues scientifiques afin d'obtenir les valeurs de ces deux constantes sans avoir à les déterminer par des expériences. Dans d'autre cas, il sera nécessaire de procéder à des tests de rupture classiques qui permettront la détermination de ces deux constantes.

Le procédé selon l'invention peut ainsi comporter, en outre :

- une étape de détermination d'une vitesse de fissuration $v$ à partir, d'une part, de la longueur de corrélation $\xi$ ou d'au moins une longueur de corrélation $\xi_\theta$ et, d'autre part, d'une fonction $v = g(\xi)$ reliant la longueur de corrélation $\xi$ ou $\xi_\theta$ à la vitesse de fissuration $v$.

Une application possible de la mesure de la vitesse de fissuration est la détermination du chargement $K$ appliqué lors de la rupture de la pièce analysée. Plus le chargement appliqué est grand, plus la vitesse de fissuration est grande. La relation $v(K)$ est connue pour un grand nombre de matériaux (voir par exemple B. Lawn, "Fracture of brittle solids", Cambridge Univ. Press, 1993). Le chargement appliqué au cours de la rupture de la pièce représente une information précieuse pour apprécier les conditions et les causes qui ont précipité la ruine d'une structure.

Finalement, il est à noter que les méthodes décrites précédemment peuvent être appliquées de deux façons différentes :

(i) Soit l'ensemble de la surface de rupture est analysé suivant la procédure décrite précédemment. Cette méthodologie permet de déterminer une longueur de corrélation $\xi$ moyenne sur l'ensemble de la surface de rupture. A partir de cette valeur, on peut alors déterminer la ténacité moyenne ou la vitesse de fissuration moyenne sur l'ensemble de la pièce.

(ii) Soit la méthode de mesure de $\xi$ est appliquée sur différentes zones de la surface de rupture. En effet, la méthode proposée donne des résultats même à partir d'une superficie relativement limitée de surface de rupture. La surface de rupture étudiée peut alors être divisée en plusieurs zones, et chaque zone étudiée individuellement. La carte topographique peut être déterminée en considérant un unique plan moyen pour toute la région de la surface de rupture, ou en considérant un plan moyen pour chaque zone. Différentes étapes du procédé décrites précédemment sont alors réalisées pour chacune des zones de la surface de rupture, de manière à fournir des informations locales relatives à la surface de rupture. En l'occurrence, différentes longueurs de corrélation $\xi$ ou $\xi_\theta$ peuvent être déterminées pour les différentes zones. On peut parler d'un champ de longueurs de corrélation $\xi(\boldsymbol{x})$ ou $\xi_\theta(\boldsymbol{x})$. L'utilisation des relations entre $\xi$ et la ténacité $K_c$ d'une part, et $\xi$ et la vitesse de fissuration $v$ d'autre part, permet de déterminer non pas une valeur de $K_c$ ou de $v$, mais leur champ $K_c(\boldsymbol{x})$ et $v(\boldsymbol{x})$ en fonction de la position sur la surface de rupture. De même, il est également possible de déterminer le champ de direction locale de fissuration. Ces champs de propriétés de rupture peuvent s'avérer précieux pour déterminer le comportement à rupture du matériau étudié ou les raisons de la rupture d'une pièce, en remontant par exemple au point faible du matériau révélé soit par l'origine des directions de propagation de la fissure, soit par une zone de plus faible ténacité.

**Description des figures**

D'autres avantages et particularités de l'invention apparaîtront à la lecture de la description détaillée de mises en oeuvre et de modes de réalisation nullement limitatifs, au regard de dessins annexés sur lesquels :

- la figure 1 représente un exemple d'étapes pouvant être mises en oeuvre dans le procédé de caractérisation d'une surface de rupture selon l'invention ;
- la figure 2 représente, dans sa partie supérieure, des exemples de cartes topographiques donnant une hauteur d'une surface de rupture par rapport à un plan moyen pour différents exemples de matériaux et, dans sa partie inférieure, des champs $\omega_\in(\boldsymbol{x})$ de différences moyennes de hauteur déterminées à partir de ces cartes topographiques ;
- la figure 3 représente, sous forme de graphiques, une fonction de corrélation spatiale des champs $\omega_\in(\boldsymbol{x})$ représentés sur la figure 2 ;
- la figure 4 représente, sous forme de graphiques, des fonctions de corrélation spatiale déterminées à partir de différentes relations pour les champs $\omega_\in(\boldsymbol{x})$;
- la figure 5 représente une fonction de corrélation spatiale déterminée pour une même surface de fracture selon deux directions distinctes ;

- la figure 6 représente une évolution d'une longueur de corrélation en fonction d'une direction de la corrélation spatiale.

**Description de modes de réalisation**

Les modes de réalisation décrits ci-après étant nullement limitatifs, on pourra notamment considérer des variantes de l'invention ne comprenant qu'une sélection de caractéristiques décrites, par la suite isolées des autres caractéristiques décrites (même si cette sélection est isolée au sein d'une phrase comprenant ces autres caractéristiques), si cette sélection de caractéristiques est suffisante pour conférer un avantage technique ou pour différencier l'invention par rapport à l'état de la technique antérieure. Cette sélection comprend au moins une caractéristique, de préférence fonctionnelle sans détails structurels, ou avec seulement une partie des détails structurels si cette partie uniquement est suffisante pour conférer un avantage technique ou pour différencier l'invention par rapport à l'état de la technique antérieure.

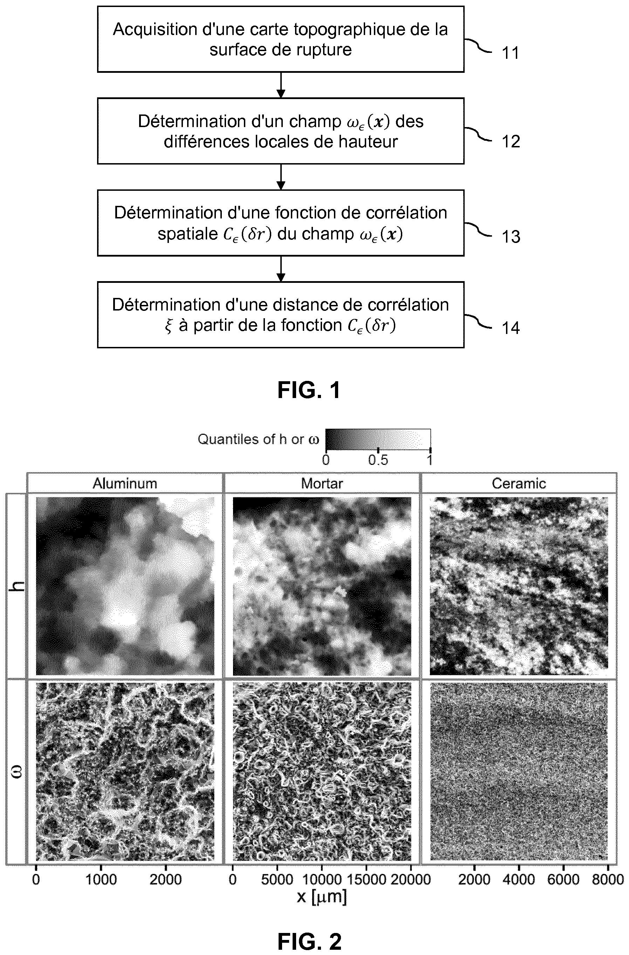

La figure 1 représente un exemple d'étapes pouvant être mises en oeuvre dans le procédé de caractérisation d'une surface de rupture selon l'invention. Dans une première étape 11, une carte topographique est établie pour la surface de rupture à analyser. Une carte topographique représente, pour un ensemble de points $\{x\}$ répartis régulièrement dans un plan moyen de la surface de rupture considérée, une hauteur $h(x)$ de la surface de rupture par rapport à ce plan moyen. Des exemples de cartes topographiques sont illustrés dans la partie supérieure de la figure 2 pour des surfaces de fracture formées par fissuration dans des pièces constituées de matériaux différents. La carte topographique de gauche illustre la surface de fracture d'une pièce en aluminium, celle du milieu illustre la surface de fracture d'une pièce en mortier, et celle de droite illustre la surface de fracture d'une pièce en céramique. Les points $x$ ou $x(x; y)$ sont définis par rapport à un repère du plan moyen comprenant un axe $X$, correspondant dans la figure 2 à l'axe horizontal, et un axe $Y$, correspondant à l'axe vertical. La hauteur $h(x)$ est définie selon un axe $Z$ orthogonal aux axes $X$ et $Y$. Elle est représentée sur la figure 2 par une échelle en niveaux de gris, plus la hauteur est faible et plus le point est foncé. Afin de représenter de façon pédagogique ces cartes topographiques et les champs $\omega_\epsilon(x)$, la hauteur $h(x)$ et $\omega_\epsilon(x)$ ont été normalisés. Toutes les hauteurs $h(x)$ sont ramenées dans une plage de valeurs comprise entre 0 et 1, où la valeur 0 correspond à la plus faible hauteur (située sous le plan moyen), et la valeur 1 correspond à la hauteur maximale (située au-dessus du plan moyen). La même procédure est appliquée au champ $\omega_\epsilon(x)$.

Chaque carte topographique est établie selon une technique d'acquisition appropriée pour le matériau considéré. En l'occurrence, la carte topographique de la figure 2 pour la pièce en aluminium a été établie à partir d'une paire stéréoscopique d'images obtenues par microscopie électronique à balayage, la carte topographique pour la pièce en mortier a été établie par profilométrie optique, et la carte topographique pour la pièce en céramique a été établie à l'aide d'un profilomètre mécanique. Les résolutions spatiales selon les axes $X$ et $Y$, notées $dx$ et $dy$, sont sensiblement égales et valent 3 μm (micromètres), 50 μm et 8 μm, pour l'aluminium, le mortier et la céramique, respectivement. La précision des mesures selon l'axe des hauteurs, c'est-à-dire selon l'axe $Z$, est égale à environ 1 μm, 10 μm et 0,2 μm pour l'aluminium, le mortier et la céramique, respectivement.

Dans une deuxième étape 12 du procédé selon l'invention, une grandeur $\omega_\epsilon(x)$ est déterminée pour chaque point $x$ de la carte topographique. Cette grandeur $\omega_\epsilon(x)$ est déterminée de manière à être représentative d'une différence moyenne de hauteur $\langle \delta h(x, \delta x) \rangle_{|\delta x| \leq \epsilon}$ entre, d'une part, la hauteur $h(x)$ de la surface de rupture au point $x$ considéré et, d'autre part, la hauteur $h(x + \delta x)$ de la surface de rupture en un ou plusieurs points $\{x + \delta x\}$ situés à l'intérieur d'un cercle de rayon $\epsilon$ centré sur le point $x$ considéré. La longueur du rayon $\epsilon$ est de préférence déterminée en fonction de la résolution spatiale de la carte topographique, c'est-à-dire en fonction de l'échelle de rugosité de la surface de rupture. Le rayon $\epsilon$ est par exemple compris entre environ une fois la résolution spatiale de la carte topographique, et environ dix fois cette résolution. De préférence, le rayon $\epsilon$ est égal à la résolution spatiale $dx$ et/ou $dy$. Dans les exemples de la figure 2, la longueur du rayon $\epsilon$ est choisie égale aux résolutions $dx$ et $dy$ des relevés topographiques. Sur l'ensemble des points $\{x\}$, les grandeurs $\omega_\epsilon(x)$ définissent une fonction. Plus précisément, elles définissent une fonction spatiale à deux dimensions. On appelle également cette fonction un champ des différences de hauteur, en particulier lorsqu'il est fait référence à sa représentation graphique.

La grandeur $\omega_\epsilon(x)$ peut être déterminée de différentes manières. Selon une première variante de réalisation, la grandeur $\omega_\epsilon(x)$ est déterminée comme étant égale à la différence moyenne de hauteur entre la hauteur $h(x)$ de la surface de rupture au point $x$ considéré, et la hauteur $h(x + \delta x)$ de la surface de rupture en un ou plusieurs points $\{x + \delta x\}$ situés sensiblement sur le périmètre du cercle de rayon $\epsilon$ centré sur le point $x$ considéré. La grandeur $\omega_\epsilon(x)$ est alors définie par la relation :

$$\omega_\epsilon(x) = \langle \delta h(x, \delta x) \rangle_{|\delta x| \sim \epsilon} \qquad (1)$$

où $\delta h(x, \delta x) = h(x + \delta x) - h(x)$, et où l'opérateur $\langle \delta h(x, \delta x) \rangle_{|\delta x| = \epsilon}$ renvoie une valeur moyenne des différences de hauteur pour l'ensemble des couples de points {$x$; $x + \delta x$} de la carte topographique tels que $|\delta x| \sim \epsilon$.

Selon une deuxième variante de réalisation, la grandeur $\omega_\epsilon(x)$ est déterminée, pour chaque point $x$ de la carte topographique, par la relation :

$$\omega_\epsilon(x) = \frac{1}{2} log\big(\langle \delta h^2(x, \delta x)\rangle_{|\delta x|\sim\epsilon}\big) \qquad (2)$$

où la fonction $a \to log(a)$ est une fonction logarithme, par exemple la fonction logarithme décimal.

Selon une troisième variante de réalisation, la grandeur $\omega_\epsilon(x)$ est déterminée, pour chaque point $x$ de la carte topographique, par la relation :

$$\omega_\epsilon(x) = sign\big(\langle \delta h(x, \delta x)\rangle_{|\delta x|\sim\epsilon}\big) \qquad (3)$$

où la fonction $a \to sign(a)$ est une fonction signe prenant la valeur 1 si a est strictement positif, -1 si a est strictement négatif, et 0 si a est nulle.

Dans chacune des variantes de réalisation, la grandeur $\omega_\epsilon(x)$ peut être déterminée de manière à ce que la fonction $\omega_\epsilon(x)$ soit sensiblement nulle sur l'ensemble des points {$x$} de la carte topographique. Une constante réelle $\Omega_\epsilon$ est soustraite dans les relations (1), (2) et (3). Cette constante $\Omega_\epsilon$ est définie à partir de la grandeur $\omega_\epsilon(x)$ correspondante, par la relation :

$$\Omega_\epsilon = \langle \omega_\epsilon(x)\rangle_x$$

Les relations (1), (2) et (3) deviennent alors :

$$\omega_\epsilon(x) = \langle \delta h(x, \delta x)\rangle_{|\delta x|\sim\epsilon} - \Omega_\epsilon \qquad (1')$$

$$\omega_\epsilon(x) = \frac{1}{2} log\big(\langle \delta h^2(x, \delta x)\rangle_{|\delta x|\sim\epsilon}\big) - \Omega_\epsilon \qquad (2')$$

$$\omega_\epsilon(x) = sign\big(\langle \delta h(x, \delta x)\rangle_{|\delta x|\sim\epsilon}\big) - \Omega_\epsilon \qquad (3')$$

La partie inférieure de la figure 2 illustre les champs $\omega_\epsilon(x)$ déterminés pour les cartes topographiques de la partie supérieure. Ainsi, de gauche à droite, les champs $\omega_\epsilon(x)$ sont représentés pour les surfaces de rupture des pièces en aluminium, en mortier et en céramique. Ces champs sont définis dans le même repère que les cartes topographiques et sont déterminés par la relation (2'). Sur la représentation de la figure 2, les champs $\omega_\epsilon(x)$ sont en outre normalisés en ramenant chaque valeur de $\omega_\epsilon(x)$ dans une plage de valeurs comprise entre 0 et 1, où la valeur 0 correspond à la différence minimale de hauteur, et la valeur 1 correspond à la différence maximale de hauteur. Comme cela est visible sur la figure 2, les champs $\omega_\epsilon(x)$ donnent des informations sur la forme et la dimension des microfissures ayant abouti à la formation de la surface de rupture. En particulier, les lignes dont l'intensité est la plus claire donnent la forme des microfissures au moment de leur coalescence avec les autres microfissures ou avec la fissure principale.

Dans une troisième étape 13 du procédé selon l'invention, une fonction de corrélation spatiale $C_\epsilon(\delta r)$ est déterminée. Cette fonction est déterminée en fonction d'une distance de test $\delta r$. Cette distance de test $\delta r$ varie de préférence entre la résolution spatiale de la carte topographique, et la plus grande dimension de la carte topographique dans le plan moyen. Elle est représentative d'une corrélation spatiale entre la fonction $\omega_\epsilon(x)$ déterminée pour l'ensemble des points {$x$}, et la fonction $\omega_\epsilon(x + \delta x)$ déterminée pour l'ensemble des points {$x + \delta x$} tels que $|\delta x| = \delta r$. La fonction de corrélation spatiale $C_\epsilon(\delta r)$ s'écrit :

$$C_\epsilon(\delta r) = \langle \omega_\epsilon(x). \omega_\epsilon(x + \delta x)\rangle_{x, |\delta x|=\delta r} \qquad (4)$$

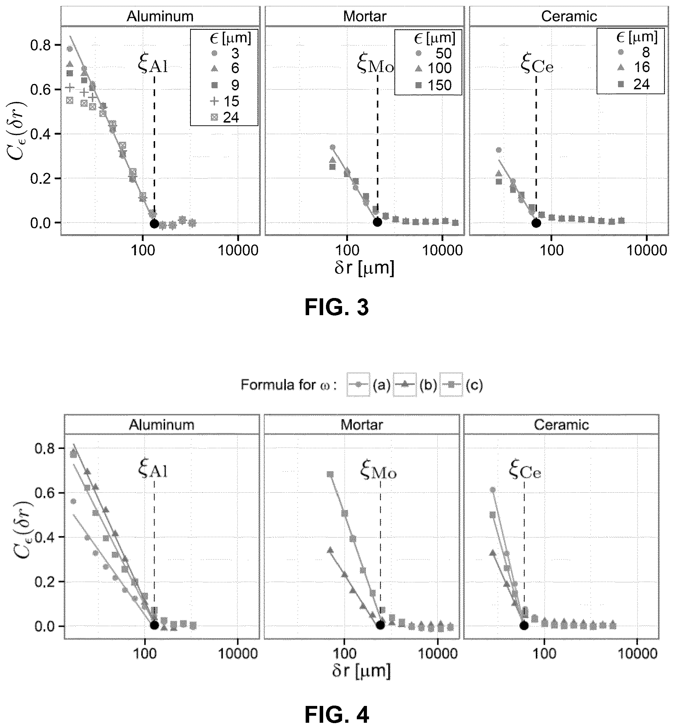

La figure 3 représente, sous forme de graphiques, la fonction de corrélation spatiale $C_\epsilon(\delta r)$ pour les surfaces de rupture des pièces en aluminium, en mortier et en céramique. L'axe des abscisses représente la distance de test $\delta r$, et l'axe des ordonnées représente la valeur de la corrélation spatiale pour cette distance. Pour chaque matériau, la fonction de corrélation $C_\epsilon(\delta r)$ a été tracée pour différentes longueurs de rayon $\epsilon$. En particulier, pour la pièce en aluminium, la fonction de corrélation $C_\epsilon(\delta r)$ a été déterminée pour des rayons de 3, 6, 9, 15, et 24 μm. Les graphiques mettent en évidence le fait que la fonction de corrélation $C_\epsilon(\delta r)$ prend une valeur nulle au-delà d'une certaine distance. Cette distance est appelée longueur de corrélation $\xi$. Elle renseigne sur la longueur de la zone d'endommagement du processus de fissuration. Il est à remarquer que la fonction de corrélation $C_\epsilon(\delta r)$ prend une valeur nulle au-delà de la longueur de corrélation $\xi$ quelle que soit la longueur du rayon $\epsilon$, tant que cette longueur est inférieure à la longueur de corrélation $\xi$. Les graphiques de la figure 3 montrent également que la longueur du rayon $\epsilon$ a une influence relativement limitée sur la forme de la fonction de corrélation $C_\epsilon(\delta r)$. Cela est particulièrement vrai pour les distances $\delta r$ supérieures à une distance seuil. Ainsi, le choix de la longueur du rayon $\epsilon$ utilisée pour la détermination de la fonction $\omega_\epsilon(\boldsymbol{x})$ n'a pas d'influence critique sur la suite du procédé, et en particulier sur la précision de la longueur de corrélation $\xi$.

La figure 4 représente différentes fonctions de corrélation spatiale $C_\epsilon(\delta r)$ pour les surfaces de rupture des pièces en aluminium, en mortier et en céramique. L'axe des abscisses représente la distance de test $\delta r$, et l'axe des ordonnées représente la valeur de la corrélation spatiale pour cette distance. Pour chaque matériau, la fonction de corrélation $C_\epsilon(\delta r)$ a été déterminée et tracée pour différentes fonctions $\omega_\epsilon(\boldsymbol{x})$, notées (a), (b) et (c), et définies comme suit :

$$\omega_\epsilon(\boldsymbol{x}) = \frac{\langle \delta h(\boldsymbol{x}, \delta \boldsymbol{x})\rangle_{|\delta \boldsymbol{x}|=\epsilon} - \Omega_\epsilon}{\sigma_\epsilon} \qquad \text{(a)}$$

$$\omega_\epsilon(\boldsymbol{x}) = \frac{1}{2} log\big(\langle \delta h^2(\boldsymbol{x}, \delta \boldsymbol{x})\rangle_{|\delta \boldsymbol{x}|=\epsilon}\big) - \Omega_\epsilon \qquad \text{(b)}$$

$$\omega_\epsilon(\boldsymbol{x}) = \langle sign(\delta h(\boldsymbol{x}, \delta \boldsymbol{x}))\rangle_{|\delta \boldsymbol{x}|=\epsilon} - \Omega_\epsilon \qquad \text{(c)}$$

où la quantité $\sigma_\epsilon$ désigne l'écart type de la fonction $\omega_\epsilon(\boldsymbol{x})$. Dans la fonction (a), la division par $\sigma_\epsilon$ permet la représentation de la fonction de corrélation sur un même graphique que les fonctions de corrélation obtenues avec (b) et (c). Il est à remarquer que la fonction (c) pourrait prendre une forme alternative, comme suit :

$$\omega_\epsilon(\boldsymbol{x}) = sign\big(\langle \delta h(\boldsymbol{x}, \delta \boldsymbol{x})\rangle_{|\delta \boldsymbol{x}|=\epsilon}\big) - \Omega_\epsilon$$

Le procédé selon l'invention comporte une quatrième étape 14, dans laquelle la longueur de corrélation $\xi$ est déterminée à partir de la fonction de corrélation $C_\epsilon(\delta r)$. Cette étape peut être réalisée de différentes manières. Elle consiste par exemple à déterminer la plus petite valeur de $\delta r$ pour laquelle la valeur de la fonction de corrélation $C_\epsilon(\delta r)$ est inférieure à une valeur seuil prédéterminée. Dans un autre mode de réalisation, cette étape est réalisée en sélectionnant un ensemble de points dont la valeur est supérieure à un seuil prédéterminé, sensiblement égal à $\Omega_\epsilon^2 = \langle \omega_\epsilon(\boldsymbol{x})\rangle_{\boldsymbol{x}}^2$, en traçant une droite passant aux plus près des points sélectionnés, et en déterminant la distance $\delta r$ pour laquelle cette droite intersecte la droite d'équation $C_\epsilon(\delta r) = \Omega_\epsilon^2$. La figure 4 met en évidence le fait que la longueur de corrélation $\xi$ est relativement indépendante de la relation choisie pour la fonction $\omega_\epsilon(\boldsymbol{x})$.

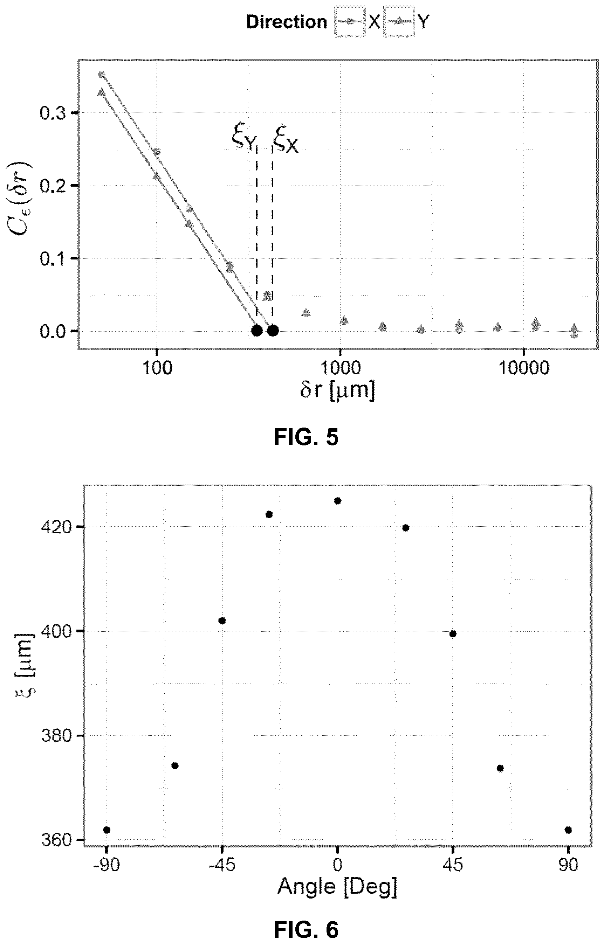

La figure 5 représente une fonction de corrélation spatiale déterminée selon deux directions distinctes pour une surface de fracture sur une pièce en mortier. Une première direction, notée X, correspond à la direction de propagation de la fissure. Une deuxième direction, notée Y, correspond à une direction perpendiculaire à la direction de propagation, dans le plan moyen. Comme cela est nettement visible sur la figure 5, la longueur de corrélation $\xi_x$ dans la direction X de propagation de la fissure est supérieure à la longueur de corrélation $\xi_y$ dans la direction Y.

La figure 6 représente plus précisément la variation de la longueur de corrélation $\xi_\theta$ en fonction de la direction de la corrélation spatiale. Il peut être observé que la longueur de corrélation $\xi_\theta$ passe par un maximum pour un angle de zéro degré, correspondant à la direction de propagation de la fissure.

Le procédé selon l'invention peut comporter des étapes supplémentaires de détermination de propriétés mécaniques du ou des matériaux de la structure à partir de la fonction $\omega_\epsilon(\boldsymbol{x})$, de la fonction de corrélation $C_\epsilon(\delta r)$ (ou d'au moins une fonction $C_{\epsilon,\theta}(\delta r)$), et/ou de la longueur de corrélation $\xi$ (ou d'au moins une longueur de corrélation $\xi_\theta$).

La ténacité $K_c$ d'un matériau peut notamment être déterminée à partir de la longueur de corrélation $\xi$ ou d'au moins une longueur de corrélation $\xi_\theta$. À titre d'exemple, pour un matériau dont la zone d'endommagement d'extension $L_c$ est décrite par une zone cohésive caractérisée par une contrainte à rupture $\sigma_c$, la ténacité $K_c$ suit la relation :

$$K_c = \sqrt{\frac{8}{\pi}} \sigma_c \sqrt{L_c}$$

Cette relation est issue de la publication G. I. Barrenblatt, "The mathematical theory of equilibrium of cracks in brittle solids", Adv. Appl. Mech. 7, 55 (1962). La longueur de corrélation $\xi$ déterminée à partir des surfaces de rupture via la présente invention donne l'extension $L_c$ de la zone d'endommagement, et donc la ténacité du matériau à travers la relation :

$$K_c = \sqrt{\frac{8}{\pi}} \sigma_c \sqrt{\xi}$$

La contrainte à rupture $\sigma_c$ du matériau étudié peut alors être déterminée de façon indépendante, soit en utilisant des méthodes expérimentales classiques, soit en utilisant les valeurs fournies dans la littérature. La contrainte à rupture d'un matériau est en général dans la gamme $E/10 < \sigma_c < E/5$, où $E$ est le module de Young du matériau.

Le procédé peut également comporter une étape de détermination de l'énergie de rupture $G_c$ du matériau. En effet, celle-ci suit la relation $G_c = K^2/E$, ce qui permet de relier l'énergie de rupture du matériau avec la longueur de corrélation extraite à partir des surfaces de rupture via la relation :

$$G_c = \frac{8}{\pi} \frac{\sigma_c^2}{E} \xi$$

Bien sûr, l'invention n'est pas limitée aux exemples qui viennent d'être décrits et de nombreux aménagements peuvent être apportés à ces exemples sans sortir du cadre de l'invention telle que définie dans les revendications. De plus, les différentes caractéristiques, formes, variantes et modes de réalisation de l'invention peuvent être associés les uns avec les autres selon diverses combinaisons dans la mesure où ils ne sont pas incompatibles ou exclusifs les uns des autres.

## Revendications

1.  Procédé de caractérisation, dans une structure solide ayant subi une fissuration, d'une surface de rupture de cette structure résultant de la fissuration, le procédé comprenant, à partir d'une carte topographique représentant, pour un ensemble de points {$x$} situés dans un plan moyen de la surface de rupture, une hauteur $h(x)$ de la surface de rupture par rapport au plan moyen :

    ▪ une étape (12) de détermination, pour chaque point $x$ de la carte topographique, d'une grandeur $\omega_\epsilon(x)$ représentative d'une différence moyenne de hauteur $\langle \delta h(x, \delta x) \rangle_{|\delta x| \leq \epsilon}$ entre, d'une part, la hauteur $h(x)$ de la surface de rupture au point $x$ considéré et, d'autre part, la hauteur $h(x + \delta x)$ de la surface de rupture en un ou plusieurs points {$x + \delta x$} situés à l'intérieur d'un cercle formé dans le plan moyen, de rayon $\epsilon$, et centré sur le point $x$ considéré, l'ensemble des grandeurs $\omega_\epsilon(x)$ définissant une fonction sur l'ensemble des points {$x$}.

2.  Procédé selon la revendication 1, dans lequel la relation définissant la grandeur $\omega_\epsilon(x)$ comprend une constante réelle $\Omega_\epsilon$ déterminée de manière à ce qu'une moyenne de la fonction $\omega_\epsilon(x)$ soit sensiblement nulle sur l'ensemble des points {$x$} de la carte topographique.

3.  Procédé selon l'une des revendications 1 et 2 comprenant, en outre :

    ▪ une étape (13) de détermination, en fonction d'une distance de test $\delta r$, d'une fonction de corrélation spatiale $C_\epsilon(\delta r)$ représentative d'une corrélation spatiale entre la fonction $\omega_\epsilon(x)$ déterminée pour l'ensemble des points {$x$}, et la fonction $\omega_\epsilon(x + \delta x)$ déterminée pour l'ensemble des points {$x + \delta x$} tels que $|\delta x| = \delta r$.

4.  Procédé selon la revendication 3 comprenant, en outre :

    ▪ une étape (14) de détermination d'une longueur dite de corrélation $\xi$ à partir de la fonction de corrélation

spatiale $C_\epsilon(\delta r)$, la longueur de corrélation $\xi$ étant égale à la distance maximale $\delta r = |\delta \boldsymbol{x}|$ séparant des couples de points $\{\boldsymbol{x}; \boldsymbol{x} + \delta \boldsymbol{x}\}$ au-delà de laquelle la fonction de corrélation spatiale $C_\epsilon(\delta r)$ devient sensiblement égale à $\Omega_\epsilon^2 = \langle \omega_\epsilon(\boldsymbol{x}) \rangle_{\boldsymbol{x}}^2$.

5. Procédé selon l'une des revendications précédentes, dans lequel la carte topographique représente une hauteur $h(\boldsymbol{x})$ de la surface de rupture par rapport au plan moyen pour un ensemble de points $\{\boldsymbol{x}\}$ situés sur une droite appartenant au plan moyen, la grandeur $\omega_\epsilon(\boldsymbol{x})$ étant représentative, pour chaque point $\boldsymbol{x}$ de la carte topographique, d'une différence moyenne de hauteur $\langle \delta h(\boldsymbol{x}, \delta \boldsymbol{x}) \rangle_{|\delta \boldsymbol{x}| \leq \epsilon}$ entre, d'une part, la hauteur $h(\boldsymbol{x})$ de la surface de rupture au point $\boldsymbol{x}$ considéré et, d'autre part, la hauteur $h(\boldsymbol{x} + \delta \boldsymbol{x})$ de la surface de rupture en un ou plusieurs points $\{\boldsymbol{x} + \delta \boldsymbol{x}\}$ situés de part et d'autre du point $\boldsymbol{x}$ considéré à une distance inférieure ou égale au rayon $\epsilon$.

6. Procédé selon l'une des revendications 1 à 4, dans lequel la carte topographique représente une hauteur $h(\boldsymbol{x})$ de la surface de rupture par rapport au plan moyen pour un ensemble de points $\{\boldsymbol{x}\}$ répartis dans le plan moyen selon deux directions non parallèles.

7. Procédé selon la revendication 6 comprenant, en outre :

   ▪ une étape de détermination, en fonction d'une distance de test $\delta r$ et d'une direction d'analyse $\theta$ dans le plan moyen, d'une fonction de corrélation spatiale $C_{\epsilon,\theta}(\delta r)$ représentative d'une corrélation spatiale entre la fonction $\omega_\epsilon(\boldsymbol{x})$ déterminée pour l'ensemble des points $\{\boldsymbol{x}\}$, et la fonction $\omega_\epsilon(\boldsymbol{x} + \delta \boldsymbol{x})$ déterminée pour l'ensemble des points $\{\boldsymbol{x} + \delta \boldsymbol{x}\}$ situés à la distance $\delta r$ dans la direction d'analyse $\theta$.

8. Procédé selon la revendication 7, dans lequel une fonction de corrélation spatiale $C_{\epsilon,\theta}(\delta r)$ est déterminée pour différentes directions d'analyse $\theta$, le procédé comprenant, en outre :

   ▪ une étape de détermination d'une longueur de corrélation $\xi_\theta$ pour chaque direction d'analyse $\theta$ à partir de la fonction de corrélation spatiale $C_{\epsilon,\theta}(\delta r)$ correspondante, la longueur de corrélation $\xi_\theta$ étant égale à la distance maximale $\delta r = |\delta \boldsymbol{x}|$ séparant des couples de points $\{\boldsymbol{x}; \boldsymbol{x} + \delta \boldsymbol{x}\}$ au-delà de laquelle la fonction de corrélation spatiale $C_{\epsilon,\theta}(\delta r)$ devient sensiblement égale à $\Omega_\epsilon^2 = \langle \omega_\epsilon(\boldsymbol{x}) \rangle_{\boldsymbol{x}}^2$.

9. Procédé selon la revendication 8 comprenant, en outre :

   ▪ une étape de détermination d'une direction de propagation de la fissuration à partir de variations de la longueur de corrélation $\xi_\theta$ avec la direction d'analyse $\theta$.

10. Procédé selon l'une des revendications 4, 8 et 9 comprenant, en outre :

    ▪ une étape de détermination d'une ténacité $K_c$ de la structure à partir de la longueur de corrélation $\xi$ ou d'au moins une longueur de corrélation $\xi_\theta$.

11. Procédé selon l'une des revendications 4 et 8 à 10, comprenant, en outre :

    ▪ une étape de détermination d'une vitesse de fissuration $v$ à partir, d'une part, de la longueur de corrélation $\xi$ ou d'au moins une longueur de corrélation $\xi_\theta$ et, d'autre part, d'une fonction $v = g(\xi)$ reliant la longueur de corrélation $\xi$ ou $\xi_\theta$ à la vitesse de fissuration $v$.

12. Procédé selon l'une des revendications 4 et 8 à 11, comprenant, en outre :

    ▪ une étape de détermination, pour chaque point $\boldsymbol{x}$ de la carte topographique, d'une grandeur $\omega_\xi(\boldsymbol{x})$ représentative d'une différence moyenne de hauteur $\langle \delta h(\boldsymbol{x}, \delta \boldsymbol{x}) \rangle_{|\delta \boldsymbol{x}| \sim \xi}$ entre, d'une part, la hauteur $h(\boldsymbol{x})$ de la surface de rupture au point $\boldsymbol{x}$ considéré et, d'autre part, la hauteur $h(\boldsymbol{x} + \delta \boldsymbol{x})$ de la surface de rupture en un ou plusieurs points $\{\boldsymbol{x} + \delta \boldsymbol{x}\}$ situés sensiblement sur le périmètre d'un cercle de rayon $\xi$ ou $\xi_\theta$ centré sur le point $\boldsymbol{x}$ considéré, et
    ▪ une étape de détermination d'une grandeur $h_\xi$ correspondant à une moyenne des grandeurs $\omega_\xi(\boldsymbol{x})$ sur l'ensemble des points $\{\boldsymbol{x}\}$.

13. Procédé selon la revendication 12 comprenant, en outre :

- une étape de détermination d'une ténacité $K_c$ de la structure à partir de la grandeur $h_\xi$.

**14.** Procédé selon l'une des revendications précédentes, dans lequel le rayon $\epsilon$ du cercle est sensiblement compris entre environ une fois une résolution spatiale de la carte topographique dans le plan moyen et environ dix fois cette résolution spatiale.

**15.** Procédé selon l'une des revendications précédentes, dans lequel la surface de rupture est divisée en plusieurs zones, la carte topographique représentant une hauteur $h(\boldsymbol{x})$ de la surface de rupture par rapport à un plan moyen dans chacune des zones, les étapes (12, 13, 14) du procédé étant réalisées individuellement pour chacune des zones de la surface de rupture, de manière à fournir des informations locales relatives à la surface de rupture, et en particulier un champ de longueurs de corrélation $\xi(\boldsymbol{x})$ ou $\xi_\theta(\boldsymbol{x})$, un champ de ténacité $K_c(\boldsymbol{x})$, un champ de vitesse de fissuration $v(\boldsymbol{x})$, et un champ de direction locale de fissuration.

**16.** Procédé selon l'une des revendications précédentes, dans lequel la grandeur $\omega_\epsilon(\boldsymbol{x})$ est représentative, pour chaque point $x$ de la carte topographique, d'une différence moyenne de hauteur $\langle \delta h(\boldsymbol{x}, \delta\boldsymbol{x}) \rangle_{|\delta\boldsymbol{x}| \leq \epsilon}$ entre, d'une part, la hauteur $h(\boldsymbol{x})$ de la surface de rupture au point $x$ considéré et, d'autre part, la hauteur $h(\boldsymbol{x} + \delta\boldsymbol{x})$ de la surface de rupture en un ou plusieurs points $\{\boldsymbol{x} + \delta\boldsymbol{x}\}$ situés sur une courbe fermée entourant le point $x$ considéré.

**17.** Procédé selon l'une des revendications précédentes, dans lequel la grandeur $\omega_\epsilon(\boldsymbol{x})$ est représentative, pour chaque point $x$ de la carte topographique, d'une différence moyenne de hauteur $\langle \delta h(\boldsymbol{x}, \delta\boldsymbol{x}) \rangle_{|\delta\boldsymbol{x}| \sim \epsilon}$ entre la hauteur $h(\boldsymbol{x})$ de la surface de rupture au point $\boldsymbol{x}$ considéré, et la hauteur $h(\boldsymbol{x} + \delta\boldsymbol{x})$ de la surface de rupture en un ou plusieurs points $\{\boldsymbol{x} + \delta\boldsymbol{x}\}$ situés sensiblement sur le périmètre du cercle de rayon $\epsilon$ centré sur le point $\boldsymbol{x}$ considéré.

**18.** Procédé selon l'une des revendications 1 à 16, dans lequel la grandeur $\omega_\epsilon(\boldsymbol{x})$ est déterminée, pour chaque point $\boldsymbol{x}$ de la carte topographique, par la relation :

$$\omega_\epsilon(\boldsymbol{x}) = f\left(\frac{1}{2} log\big(\langle \delta h^2(\boldsymbol{x}, \delta\boldsymbol{x}) \rangle_{|\delta\boldsymbol{x}| \sim \epsilon}\big)\right)$$

où la fonction $a \to f(a)$ est une fonction affine, où la fonction $a \to log(a)$ est une fonction logarithme, où la quantité $\delta h(\boldsymbol{x}, \delta\boldsymbol{x})$ définit la différence de hauteur $h(\boldsymbol{x} + \delta\boldsymbol{x}) - h(\boldsymbol{x})$, où le signe $\sim$ indique une quantité sensiblement égale, et où l'opérateur $\langle \delta h(\boldsymbol{x}, \delta\boldsymbol{x}) \rangle_{|\delta\boldsymbol{x}| \sim \epsilon}$ renvoie une valeur moyenne des différences de hauteur pour l'ensemble des couples de points $\{\boldsymbol{x}; \boldsymbol{x} + \delta\boldsymbol{x}\}$ de la carte topographique tels que la distance $|\delta\boldsymbol{x}|$ est sensiblement égale au rayon $\epsilon$.

**19.** Procédé selon l'une des revendications 1 à 16, dans lequel la grandeur $\omega_\epsilon(\boldsymbol{x})$ est déterminée, pour chaque point $\boldsymbol{x}$ de la carte topographique, par la relation :

$$\omega_\epsilon(\boldsymbol{x}) = f\left(sign\big(\langle \delta h(x, \delta x) \rangle_{|\delta x| \sim \epsilon}\big)\right)$$

où la fonction $a \to sign(a)$ est une fonction signe prenant la valeur 1 si a est strictement positif, -1 si a est strictement négatif, et 0 si a est nulle, où la quantité $\delta h(\boldsymbol{x}, \delta\boldsymbol{x}) = h(\boldsymbol{x} + \delta\boldsymbol{x}) - h(\boldsymbol{x})$, et où l'opérateur $\langle \delta h(\boldsymbol{x}, \delta\boldsymbol{x}) \rangle_{|\delta\boldsymbol{x}| \sim \epsilon}$ renvoie une valeur moyenne des différences de hauteur pour l'ensemble des couples de points $\{\boldsymbol{x}; \boldsymbol{x} + \delta\boldsymbol{x}\}$ de la carte topographique tels que la longueur $|\delta\boldsymbol{x}|$ est sensiblement égale au rayon $\epsilon$.

**20.** Procédé selon l'une des revendications précédentes comprenant, préalablement à l'étape (12) de détermination de grandeurs $\omega_\epsilon(\boldsymbol{x})$, une étape (11) d'acquisition d'une carte topographique représentant, pour un ensemble de points $\{\boldsymbol{x}\}$ situés dans un plan moyen de la surface de rupture, une hauteur $h(\boldsymbol{x})$ de la surface de rupture par rapport au plan moyen, ladite carte topographique étant utilisée pour l'étape (12) de détermination de grandeurs $\omega_\epsilon(\boldsymbol{x})$.

**Patentansprüche**

**1.** Verfahren zur Charakterisierung, in einer festen Struktur, in welcher sich ein Riss gebildet hat, einer als Ergebnis der Rissbildung geformten Bruchfläche dieser Struktur, wobei das Verfahren auf der Grundlage einer topographischen Karte zur Darstellung einer Höhe $h(\boldsymbol{x})$ der Bruchfläche im Vergleich zu einer mittleren Ebene, für eine Gesamtheit von auf der mittleren Eben der Bruchfläche angeordneten Punkten {$x$}, umfasst:

- für jeden Punkt $x$ der topographischen Karte einen Schritt (12) der Bestimmung einer Größe $\omega_e(x)$ zur Darstellung eines Durchschnittsunterschieds in der Höhe $\langle\delta h(x, \delta x)\rangle_{|\delta x|\leq\epsilon}$ zwischen einerseits der Höhe $h(x)$ der Bruchfläche an dem betroffenen Punkt $x$ und andererseits der Höhe $h(x + \delta x)$ der Bruchfläche an einem oder mehreren, innerhalb eines in der mittleren Ebene, mit dem Radius e und dem betroffenen Mittelpunkt $x$ gebildeten Kreises angeordneten Punkten {$x + \delta x$}, wobei die Gesamtheit der Größen $\omega_\epsilon(x)$ eine Funktion bezüglich der Gesamtheit der Punkte {$x$} definiert.

2. Verfahren nach Anspruch 1, in dem die die Größe $\omega_\epsilon(x)$ definierende Relation eine tatsächliche Konstante $\Omega_\epsilon$ umfasst, welche derart bestimmt wird, dass ein Mittelwert der Funktion $\omega_\epsilon(x)$ bei der Gesamtheit der Punkte {$x$} der topographischen Karte im Wesentlichen gleich Null ist.

3. Verfahren nach einem der Ansprüche 1 und 2, außerdem umfassend:

- abhängig von einer Testentfernung $\delta r$ einen Schritt (13) zur Ermittlung einer Funktion der räumlichen Korrelation $C_\epsilon(\delta r)$ zur Darstellung einer räumlichen Korrelation zwischen der Funktion $\omega_\epsilon(x)$, die für die Gesamtheit der Punkte {$x$} ermittelt wurde, und der Funktion $\omega_\epsilon(x + \delta x)$, die für die Gesamtheit der Punkte {$x + \delta x$} wie z. B. |$\delta x$| = $\delta$r ermittelt wurde.

4. Verfahren nach Anspruch 3, außerdem umfassend:

- einen Schritt (14) zur Ermittlung einer sogenannten Korrelationslänge $\xi$ anhand der Funktion der räumlichen Korrelation $C_\epsilon(\delta r)$, wobei die Korrelationslänge $\xi$ gleich der maximalen Entfernung $\delta r$ = |$\delta x$| zwischen Paaren von Punkten {$x$; $x + \delta x$} ist, über welche hinaus die Funktion der räumlichen Korrelation $C_\epsilon(\delta r)$ im Wesentlichen

  gleich $\Omega_\epsilon^2 = \langle\omega_\epsilon(x)\rangle_x^2$ wird.

5. Verfahren nach einem der vorhergehenden Ansprüche, in dem die topographische Karte eine Höhe $h(x)$ der Bruchfläche im Vergleich zur mittleren Ebene für eine Gesamtheit von Punkten {$x$} darstellt, welche auf einer zur der mittleren Ebene gehörenden Geraden liegen, wobei die Größe $\omega_\epsilon(x)$ für jeden Punkt $x$ der topographischen Karte einen Durchschnittsunterschied in der Höhe $\langle\delta h(x, \delta x)\rangle_{|\delta x|\leq\epsilon}$ zwischen einerseits der Höhe $h(x)$ der Bruchfläche an dem betroffenen Punkt $x$ und andererseits der Höhe $h(x + \delta x)$ der Bruchfläche an einem oder mehreren Punkten {$x + \delta x$} darstellt, die links und rechts des betroffenen Punkts $x$ in einer Entfernung kleiner oder gleich dem Radius e liegen.

6. Verfahren nach einem der Ansprüche 1 bis 4, in dem die topographische Karte eine Höhe $h(x)$ der Bruchfläche im Vergleich zur mittleren Ebene für eine Gesamtheit von Punkten {$x$} darstellt, welche in der mittleren Ebene in zwei nicht parallelen Richtungen verteilt sind.

7. Verfahren nach Anspruch 6, außerdem umfassend:

- abhängig von einer Testentfernung $\delta r$ und einer Analyserichtung $\theta$ in der mittleren Ebene einen Schritt zur Ermittlung einer Funktion der räumlichen Korrelation $C_{\epsilon,\theta}(\delta r)$ zur Darstellung einer räumlichen Korrelation zwischen der Funktion $\omega_e(x)$, die für die Gesamtheit der Punkte {$x$} ermittelt wurde, und der Funktion $\omega_e(x + \delta x)$, die für die Gesamtheit der Punkte {$x + \delta x$} ermittelt wurde, welche zu der Entfernung $\delta r$ in der Analyserichtung $\theta$ liegen.

8. Verfahren nach Anspruch 7, in dem eine Funktion der räumlichen Korrelation $C_{\epsilon,\theta}(\delta r)$ für verschiedene Analyserichtungen $\theta$ ermittelt wird, wobei das Verfahren außerdem umfasst:

- einen Schritt zur Ermittlung einer Korrelationslänge $\xi_\theta$ für jede Analyserichtung $\theta$ anhand der entsprechenden Funktion der räumlichen Korrelation $C_{\epsilon,\theta}(\delta r)$, wobei die Korrelationslänge $\xi_\theta$ gleich der maximalen Entfernung $\delta r$ = |$\delta x$| zwischen Paaren von Punkten {$x$; $x + \delta x$} ist, über welche hinaus die Funktion der räumlichen Korrelation $C_{\epsilon,\theta}(\delta r)$ im Wesentlichen gleich $\Omega_\epsilon^2 = \langle\omega_\epsilon(x)\rangle_x^2$ wird.

9. Verfahren nach Anspruch 8, außerdem umfassend:

- einen Schritt zur Ermittlung einer Richtung der Ausbreitung der Rissbildung anhand von Änderungen der Korrelationslänge $\xi_\theta$ mittels der Analyserichtung $\theta$.

10. Verfahren nach einem der Ansprüche 4, 8 und 9, außerdem umfassend:

- einen Schritt zur Ermittlung einer Festigkeit $K_c$ der Struktur anhand der Korrelationslänge $\xi$ oder mindestens einer Korrelationslänge $\xi_\theta$.

11. Verfahren nach einem der Ansprüche 4 und 8 bis 10, außerdem umfassend:

- einen Schritt zur Ermittlung einer Rissgeschwindigkeit $v$ anhand einerseits der Korrelationslänge $\xi$ oder mindestens einer Korrelationslänge $\xi_\theta$ und andererseits einer Funktion $v = g(\xi)$, welche die Korrelationslänge $\xi$ oder $\xi_\theta$ mit der Rissbildungsgeschwindigkeit $v$ in Verbindung bringt.

12. Verfahren nach einem der Ansprüche 4 und 8 bis 11, außerdem umfassend:

- für jeden Punkt $x$ der topographischen Karte einen Schritt zur Ermittlung einer Größe $\omega_\xi(x)$ zur Darstellung eines Durchschnittsunterschieds in der Höhe $\langle \delta h(x, \delta x) \rangle_{|\delta x| \sim \xi}$ zwischen einerseits der Höhe $h(x)$ der Bruchfläche an dem betroffenen Punkt $x$ und andererseits der Höhe $h(x + \delta x)$ der Bruchfläche an einem oder mehreren Punkten $\{x + \delta x\}$, die im Wesentlichen auf dem Umfang eines Kreises mit dem Radius $\xi$ oder $\xi_\theta$ und mit dem betroffenen Mittelpunkt $x$ liegen, und
- einen Schritt zur Ermittlung einer Größe $h_\xi$, die einem Mittelwert der Größen $\omega_\xi(x)$ auf der Gesamtheit der Punkte $\{x\}$ entspricht.

13. Verfahren nach Anspruch 12, außerdem umfassend:

- einen Schritt zur Ermittlung einer Festigkeit $K_c$ der Struktur anhand der Größe $h_\xi$.

14. Verfahren nach einem der vorhergehenden Ansprüche, in dem der Radius e des Kreises im Wesentlichen zwischen ungefähr einmal eine räumliche Auflösung der topographischen Karte in der mittleren Ebene und ungefähr zehnmal diese räumliche Auflösung beträgt.

15. Verfahren nach einem der vorhergehenden Ansprüche, in dem die Bruchfläche in mehreren Bereichen geteilt ist, wobei die topographische Karte eine Höhe $h(x)$ der Bruchfläche im Vergleich zu einer mittleren Ebene in jedem der Bereiche darstellt, wobei die Schritte (12, 13, 14) des Verfahrens jeweils einzeln für jeden der Bereiche der Bruchfläche derart ausgeführt werden, um örtliche Informationen bezüglich der Bruchfläche, und insbesondere ein Feld von Korrelationslängen f($x$) oder $\xi_\theta(x)$, ein Feld der Festigkeit $K_c(x)$, ein Feld der Rissbildungsgeschwindigkeit $v(x)$ und ein Feld der örtlichen Richtung der Rissbildung zu liefern.

16. Verfahren nach einem der vorhergehenden Ansprüche, in dem die Größe $\omega_\in(x)$ für jeden Punkt $x$ der topographischen Karte einen Durchschnittsunterschied der Höhe $\langle \delta h(x, \delta x) \rangle_{|\delta x| \leq \in}$ zwischen einerseits der Höhe $h(x)$ der Bruchfläche an dem betroffenen Punkt $x$ und andererseits der Höhe $h(x + \delta x)$ der Bruchfläche an einem oder mehreren Punkten $\{x + \delta x\}$ darstellt, welche auf einer geschlossenen Kurve liegen, die den betroffenen Punkt $x$ umringt.

17. Verfahren nach einem der vorhergehenden Ansprüche, in dem die Größe $\omega_\in(x)$ für jeden Punkt $x$ der topographischen Karte einen Durchschnittsunterschied der Höhe $\langle \delta h(x, \delta x) \rangle_{|\delta x| \sim \in}$ zwischen der Höhe $h(x)$ der Bruchfläche an dem betroffenen Punkt $x$ und der Höhe $h(x + \delta x)$ der Bruchfläche an einem oder mehreren Punkten $\{x + \delta x\}$ darstellt, die im Wesentlichen auf dem Umfang des Kreises mit dem Radius e und dem betroffenen Mittelpunkt $x$ liegen.

18. Verfahren nach einem der Ansprüche 1 bis 16, in dem die Größe $\omega_\in(x)$ für jeden Punkt $x$ der topographischen Karte durch die Relation bestimmt wird:

$$\omega_\epsilon(x) = f\left(\frac{1}{2} log\big(\langle \delta h^2(x, \delta x) \rangle_{|\delta x| \sim \epsilon}\big)\right)$$

wo die Funktion $a \rightarrow f(a)$ eine lineare Funktion ist, wo die Funktion $a \rightarrow log(a)$ eine logarithmische Funktion ist, wo die Menge $\delta h(x, \delta x)$ den Höhenunterschied $h(x + \delta x) - h(x)$ definiert, wo das Zeichen $\sim$ eine im Wesentlichen gleiche Menge angibt und wo der Operator $\langle\delta h(\mathbf{x}, \delta\mathbf{x})\rangle_{|\delta\mathbf{x}|\sim\epsilon}$ einen Durchschnittswert der Höhenunterschiede für die Gesamtheit der Paare von solchen Punkten {$\mathbf{x}$; $\mathbf{x} + \delta\mathbf{x}$} der topographischen Karte derart spiegelt, dass die Entfernung $|\delta\mathbf{x}|$ im Wesentlichen gleich dem Radius $\epsilon$ ist.

19. Verfahren nach einem der Ansprüche 1 bis 16, in dem die Größe $\omega_\epsilon(\mathbf{x})$ für jeden Punkt $\mathbf{x}$ der topographischen Karte durch die Relation bestimmt wird:

$$\omega_\epsilon(\mathbf{x}) = f\left(sign\big(\langle\delta h(\mathbf{x}, \delta\mathbf{x})\rangle_{|\delta\mathbf{x}|\sim\epsilon}\big)\right)$$

wo die Funktion $a \rightarrow sign(a)$ eine Signumfunktion mit dem Wert 1 ist, wenn a streng positiv ist, -1, wenn a streng negativ ist und 0, wenn a gleich Null ist, wo die Menge $\delta h(\mathbf{x}, \delta\mathbf{x}) = h(\mathbf{x} + \delta\mathbf{x}) - h(\mathbf{x})$, und wo der Operator $\langle\delta h(\mathbf{x}, \delta\mathbf{x})\rangle_{|\delta\mathbf{x}|\sim\epsilon}$ einen Durchschnittswert der Höhenunterschiede für die Gesamtheit der Paare von solchen Punkten {$\mathbf{x}$; $\mathbf{x} + \delta\mathbf{x}$} der topographischen Karte derart spiegelt, dass die Länge $|\delta\mathbf{x}|$ im Wesentlichen gleich dem Radius $\epsilon$ ist.

20. Verfahren nach einem der vorhergehenden Ansprüche, vor dem Schritt (12) zur Ermittlung der Größen $\omega_\epsilon(\mathbf{x})$ einen Schritt (11) zur Erfassung einer topographischen Karte umfassend, welche für eine Gesamtheit von in einer mittleren Ebene der Bruchfläche liegenden Punkten {$\mathbf{x}$} eine Höhe $h(\mathbf{x})$ der Bruchfläche im Vergleich zur mittleren Ebene darstellt, wobei die topographische Karte für den Schritt (12) zur Ermittlung von Größen $\omega_\epsilon(\mathbf{x})$ eingesetzt wird.

**Claims**

1. Method for **characterizing, in** a solid structure having undergone cracking, a fracture surface of this structure resulting from the cracking, the method comprising, based on a topographical map representing, for a set of points {$\mathbf{x}$} situated in a mean plane of the fracture surface, a height $h(\mathbf{x})$ of the fracture surface with respect to the mean plane:

   - a step (12) of determining, for each point $\mathbf{x}$ of the topographical map, a variable $\omega_\epsilon(\mathbf{x})$ representative of an average height difference $\langle\delta h(\mathbf{x}, \delta\mathbf{x})\rangle_{|\delta\mathbf{x}|\leq\epsilon}$ between, on the one hand, the height $h(\mathbf{x})$ of the fracture surface at the point $\mathbf{x}$ in question and, on the other hand, the height $h(\mathbf{x} + \delta\mathbf{x})$ of the fracture surface at one or more points {$\mathbf{x} + \delta\mathbf{x}$} situated within a circle formed in the mean plane, of radius $\epsilon$, and centred on the point $\mathbf{x}$ in question, the set of variables $\omega_\epsilon(\mathbf{x})$ defining a function over the set of points {$\mathbf{x}$}.

2. Method according to claim 1, in which the relationship defining the variable $\omega_\epsilon(\mathbf{x})$ comprises a real constant $\Omega_\epsilon$ determined so that an average of the function $\omega_\epsilon(\mathbf{x})$ is substantially zero over the set of points {$\mathbf{x}$} of the topographical map.

3. Method according to one of claims 1 and 2, also comprising:

   - a step (13) of determining, as a function of a test distance $\delta r$, a spatial correlation function $C_\epsilon(\delta r)$ representative of a spatial correlation between the function $\omega_\epsilon(\mathbf{x})$ determined for the set of points {$\mathbf{x}$}, and the function $\omega_\epsilon(\mathbf{x} + \delta\mathbf{x})$ determined for the set of points {$\mathbf{x} + \delta\mathbf{x}$} such that $|\delta\mathbf{x}| = \delta r$.

4. Method according to claim 3, also comprising:

   - a step (14) of determining a length, called correlation length $\xi$ from the spatial correlation function $C_\epsilon(\delta r)$, the correlation length $\xi$ being equal to the maximum distance $\delta r = |\delta\mathbf{x}|$ separating pairs of points {$\mathbf{x}$; $\mathbf{x} + \delta\mathbf{x}$} beyond which the spatial correlation function $C_\epsilon(\delta r)$ becomes substantially equal to $\Omega_\epsilon^2 = \langle\omega_\epsilon(\mathbf{x})\rangle_\mathbf{x}^2$.

5. Method according to one of the preceding claims, in which the topographical map represents a height $h(\mathbf{x})$ of the fracture surface with respect to the mean plane for a set of points {$\mathbf{x}$} situated on a straight line belonging to the mean plane, the variable $\omega_\epsilon(\mathbf{x})$ being representative, for each point $\mathbf{x}$ of the topographical map, of an average height difference $\langle\delta h(\mathbf{x}, \delta\mathbf{x})\rangle_{|\delta\mathbf{x}|\leq\epsilon}$ between, on the one hand, the height $h(\mathbf{x})$ of the fracture surface at the point $\mathbf{x}$ in question and, on the other hand, the height $h(\mathbf{x} + \delta\mathbf{x})$ of the fracture surface at one or more points {$\mathbf{x} + \delta\mathbf{x}$} situated on either side of the point $\mathbf{x}$ in question at a distance less than or equal to the radius $\epsilon$.

**6.** Method according to one of claims 1 to 4, in which the topographical map represents a height $h(\boldsymbol{x})$ of the fracture surface with respect to the mean plane for a set of points $\{\boldsymbol{x}\}$ distributed in the mean plane in two non-parallel directions.

**7.** Method according to claim 6, also comprising:

- a step of determining, as a function of a test distance $\delta r$ and a direction of analysis $\theta$ in the mean plane, a spatial correlation function $C_{\in,\theta}(\delta r)$ representative of a spatial correlation between the function $\omega_{\in}(\boldsymbol{x})$ determined for the set of points $\{\boldsymbol{x}\}$, and the function $\omega_{\in}(\boldsymbol{x} + \delta\boldsymbol{x})$ determined for the set of points $\{\boldsymbol{x} + \delta\boldsymbol{x}\}$ situated at the distance $\delta r$ in the direction of analysis $\theta$.

**8.** Method according to claim 7, in which a spatial correlation function $C_{\in,\theta}(\delta r)$ is determined for different directions of analysis $\theta$, the method also comprising:

- a step of determining a correlation length $\xi_{\theta}$ for each direction of analysis $\theta$ from the corresponding spatial correlation function $C_{\in,\theta}(\delta r)$, the correlation length $\xi_{\theta}$ being equal to the maximum distance $\delta r = |\delta\boldsymbol{x}|$ separating pairs of points $\{\boldsymbol{x}; \boldsymbol{x} + \delta\boldsymbol{x}\}$ beyond which the spatial correlation function $C_{\in,\theta}(\delta r)$ becomes substantially equal to

$$\Omega_{\epsilon}^2 = \langle\omega_{\epsilon}(\boldsymbol{x})\rangle_{\boldsymbol{x}}^2.$$

**9.** Method according to claim 8, also comprising:

- a step of determining a direction of propagation of the cracking based on variations in the correlation length $\xi_{\theta}$ with the direction of analysis $\theta$.

**10.** Method according to one of claims 4, 8 and 9 also comprising:

- a step of determining a toughness $K_c$ of the structure from the correlation length $\xi$ or at least one correlation length $\xi_{\theta}$.

**11.** Method according to one of claims 4 and 8 to 10, also comprising:

- a step of determining a cracking velocity $v$ from, on the one hand, the correlation length $\xi$ or at least one correlation length $\xi_{\theta}$, and on the other hand, on a function $v = g(\xi)$ linking the correlation length $\xi$ or $\xi_{\theta}$ to the cracking velocity $v$.

**12.** Method according to one of claims 4 and 8 to 11, also comprising:

- a step of determining, for each point $\boldsymbol{x}$ of the topographical map, a variable $\omega_{\xi}(\boldsymbol{x})$ representative of an average height difference $\langle\delta h(\boldsymbol{x}, \delta\boldsymbol{x})\rangle_{|\delta\boldsymbol{x}|\sim\xi}$ between, on the one hand, the height $h(\boldsymbol{x})$ of the fracture surface at the point $\boldsymbol{x}$ in question and, on the other hand, the height $h(\boldsymbol{x} + \delta\boldsymbol{x})$ of the fracture surface at one or more points $\{\boldsymbol{x} + \delta\boldsymbol{x}\}$ situated substantially on the perimeter of a circle of radius $\xi$ or $\xi_{\theta}$ centred on the point $\boldsymbol{x}$ in question, and
- a step of determining a variable $h_{\xi}$ corresponding to an average of the variables $\omega_{\xi}(\boldsymbol{x})$ over the set of points $\{\boldsymbol{x}\}$.

**13.** Method according to claim 12, also comprising:

- a step of determining a toughness $K_c$ of the structure from the variable $h_{\xi}$.

**14.** Method according to one of the preceding claims, in which the radius $\in$ of the circle is substantially comprised between one times a spatial resolution of the topographical map in the mean plane and approximately ten times this spatial resolution.

**15.** Method according to one of the preceding claims, in which the fracture surface is divided into several zones, the topographical map representing a height $h(\boldsymbol{x})$ of the fracture surface with respect to a mean plane in each of the zones, the steps (12, 13, 14) of the method being carried out individually for each of the zones of the fracture surface, so as to provide local information relating to the fracture surface, and in particular a correlation lengths field $\xi(\boldsymbol{x})$ or $\xi_{\theta}(\boldsymbol{x})$, a toughness field $K_c(\boldsymbol{x})$, a cracking velocity field $v(\boldsymbol{x})$, and a local direction of cracking field.

**16.** Method according to one of the preceding claims, in which the variable $\omega_{\in}(\boldsymbol{x})$ is representative, for each point $\boldsymbol{x}$ of

the topographical map, of an average height difference $\langle \delta h(\boldsymbol{x}, \delta \boldsymbol{x}) \rangle_{|\delta \boldsymbol{x}| \leq \epsilon}$ between, on the one hand, the height $h(\boldsymbol{x})$ of the fracture surface at the point $\boldsymbol{x}$ in question, and, on the other hand, the height $h(\boldsymbol{x} + \delta \boldsymbol{x})$ of the fracture surface at one or more points $\{\boldsymbol{x} + \delta \boldsymbol{x}\}$ situated on a closed curve surrounding the point $\boldsymbol{x}$ in question.

17. Method according to one of the preceding claims, in which the variable $\omega_\epsilon(\boldsymbol{x})$ is representative, for each point $\boldsymbol{x}$ of the topographical map, of an average height difference $\langle \delta h(\boldsymbol{x}, \delta \boldsymbol{x}) \rangle_{|\delta \boldsymbol{x}| \sim \epsilon}$ between the height $h(\boldsymbol{x})$ of the fracture surface at the point $\boldsymbol{x}$ in question, and the height $h(\boldsymbol{x} + \delta \boldsymbol{x})$ of the fracture surface at one or more points $\{\boldsymbol{x} + \delta \boldsymbol{x}\}$ situated substantially on the perimeter of the circle of radius $\epsilon$ centred on the point $\boldsymbol{x}$ in question.

18. Method according to one of claims 1 to 16, in which the variable $\omega_\epsilon(\boldsymbol{x})$ is determined, for each point $\boldsymbol{x}$ of the topographical map, by the relationship:

$$\omega_\epsilon(\boldsymbol{x}) = f\left(\frac{1}{2} log\big(\langle \delta h^2(\boldsymbol{x}, \delta \boldsymbol{x}) \rangle_{|\delta x| \sim \epsilon}\big)\right)$$

where the function $a \to f(a)$ is an affine function, where the function $a \to log(a)$ is a logarithmic function, where the quantity $\delta h(\boldsymbol{x}, \delta \boldsymbol{x})$ defines the height difference $h(\boldsymbol{x} + \delta \boldsymbol{x}) - h(\boldsymbol{x})$, where the sign $\sim$ indicates a substantially equal quantity, and where the operator $\langle \delta h(\boldsymbol{x}, \delta \boldsymbol{x}) \rangle_{|\delta \boldsymbol{x}| \sim \epsilon}$ returns an average value of the height differences for the set of pairs of points $\{\boldsymbol{x}; \boldsymbol{x} + \delta \boldsymbol{x}\}$ of the topographical map such that the distance $|\delta \boldsymbol{x}|$ is substantially equal to the radius $\epsilon$.

19. Method according to one of claims 1 to 16, in which the variable $\omega_\epsilon(\boldsymbol{x})$ is determined, for each point $\boldsymbol{x}$ of the topographical map, by the relationship:

$$\omega_\epsilon(\boldsymbol{x}) = f\left(sign\big(\langle \delta h(\boldsymbol{x}, \delta \boldsymbol{x}) \rangle_{|\delta x| \sim \epsilon}\big)\right)$$

where the function $a \to sign(a)$ is a sign function taking the value 1 if a is strictly positive, -1 if a is strictly negative, and 0 if a is zero, where the quantity $\delta h(\boldsymbol{x}, \delta \boldsymbol{x}) = h(\boldsymbol{x} + \delta \boldsymbol{x}) - h(\boldsymbol{x})$, and where the operator $\langle \delta h(\boldsymbol{x}, \delta \boldsymbol{x}) \rangle_{|\delta \boldsymbol{x}| \sim \epsilon}$ returns an average value for the height differences for the set of pairs of points $\{\boldsymbol{x}; \boldsymbol{x} + \delta \boldsymbol{x}\}$ of the topographical map such that the length $|\delta \boldsymbol{x}|$ is substantially equal to the radius $\epsilon$.

20. Method according to one of the preceding claims, comprising, prior to step (12) of determining variables $\omega_\epsilon(\boldsymbol{x})$, a step (11) of acquiring a topographical map representing, for a set of points $\{\boldsymbol{x}\}$ situated in a mean plane of the fracture surface, a height $h(\boldsymbol{x})$ of the fracture surface with respect to the mean plane, said topographical map being used for step (12) of determining the variables $\omega\epsilon(\boldsymbol{x})$.

```
Acquisition d'une carte topographique de la
surface de rupture                              ⌐ 11

Détermination d'un champ $\omega_\epsilon(x)$ des
différences locales de hauteur                  ⌐ 12

Détermination d'une fonction de corrélation
spatiale $C_\epsilon(\delta r)$ du champ $\omega_\epsilon(x)$    ⌐ 13

Détermination d'une distance de corrélation
$\xi$ à partir de la fonction $C_\epsilon(\delta r)$    ⌐ 14
```

**FIG. 1**

**FIG. 2**

FIG. 3

FIG. 4

**FIG. 5**

**FIG. 6**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2892811

- US 2013013223 A

**Littérature non-brevet citée dans la description**

- **BOUCHAUD, E.** Scaling properties of cracks. *J. Phys. Condens. Matter,* 1997, vol. 9, 4319-4344
- **C. GUERRA ; J. SCHEIBERT ; D. BONAMY ; D. DALMAS.** Understanding fast macroscale fracture from microcrack post mortem patterns. *PNAS,* 2012, vol. 109, 390-394

- **G. I. BARRENBLATT.** The mathematical theory of equilibrium of cracks in brittle solids. *Adv. Appl. Mech.,* 1962, vol. 7, 55
- **R.J. CHARLES.** Static fatigue of glass. *J. Appl. Phys.,* 1958, vol. 29, 1554
- **B. LAWN.** Fracture of brittle solids. Cambridge Univ. Press, 1993